# EUROPÄISCHE PATENTSCHRIFT

(11) **EP 4 222 554 B1**
(45) Veröffentlichungstag und Bekanntmachung des Hinweises auf die Patenterteilung: **04.11.2026**
(21) Anmeldenummer: 21785809.1
(22) Anmeldetag: 27.09.2021
(51) Int. Cl.: G02F 1/13, G02F 1/13357, G02F 1/1335, G02F 1/1347, G02F 1/137

(54) **SCHALTBARER LICHTFILTER**
SWITCHABLE LIGHT FILTER
FILTRE DE LUMIÈRE COMMUTABLE

(30) Priorität: 30.09.2020 DE 102020006110; 19.05.2021 DE 102021112947
(43) Veröffentlichungstag der Anmeldung: 09.08.2023
(73) Patentinhaber: Sioptica GmbH, 07745 Jena (DE)
(72) Erfinder: HEBER, André, 99425 Weimar (DE); BREGULLA, Andreas, 37115 Duderstadt (DE); BOURGIN, Yannick, 99510 Ilmtal-Weinstraße OT Ossmannstedt (DE); KLIPPSTEIN, Markus, 07751 Jena (DE)
(74) Vertreter: Gleim Petri Patent- und Rechtsanwaltspartnerschaft mbB
(86) Internationale Anmeldenummer: PCT/EP2021/076471
(87) Internationale Veröffentlichungsnummer: WO 2022/069397

(56) Entgegenhaltungen:
- US-A1- 2020 026 114
- US-B1- 10 649 248

## Beschreibung

### Technisches Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dementsprechend brauchen die Menschen eine Kontrolle darüber, wer diese sensiblen Daten sehen darf; sie müssen wählen können zwischen einem weiten Betrachtungswinkel - einem öffentlichen Modus -, um Informationen auf ihrem Display mit anderen zu teilen, z.B. beim Betrachten von Urlaubsfotos oder auch für Werbezwecke. Andererseits benötigen sie einen kleinen Betrachtungswinkel - in einem privaten Modus -, wenn sie die Bildinformationen vertraulich behandeln wollen.

Eine ähnliche Problemstellung ergibt sich im Fahrzeugbau: Dort darf der Fahrer bei eingeschaltetem Motor nicht durch Bildinhalte, wie etwa digitale Entertainmentprogramme, abgelenkt werden, während der Beifahrer diese jedoch auch während der Fahrt konsumieren möchte. Mithin wird ein Bildschirm benötigt, der zwischen den entsprechenden Darstellungsmodi umschalten kann.

Zusatzfolien, die auf Mikro-Lamellen basieren, wurden bereits für mobile Displays eingesetzt, um deren visuellen Datenschutz zu erreichen. Allerdings waren diese Folien nicht schaltbar oder umschaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 B2 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 A wird der Einsatz einer Folie beschrieben, die auf ihrer Oberfläche gleichmäßig angeordnete, kleine streifenförmige Prismen hat, um einen privaten Modus, d.h. einen eingeschränkten Sichtmodus mit einem kleinen Betrachtungswinkelbereich, zu erzielen. Entwicklung und Herstellung sind technisch recht aufwendig.

In der WO 2012/033583 A1 wird die Umschaltung zwischen freier und eingeschränkter Sicht vermittels der Ansteuerung von Flüssigkristallen zwischen sogenannten "chromonischen" Schichten erzeugt. Hierbei entsteht ein Lichtverlust und der technische Aufwand ist recht hoch.

Die US 2012/0235891 A1 beschreibt ein sehr aufwendiges Backlight - eine Hintergrundbeleuchtung - in einem Bildschirm. Dort kommen gemäß Fig.1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen. Dies ist teuer und technisch aufwendig umzusetzen und ebenso mit Lichtverlust verbunden. Gemäß der Variante nach Fig.17 in der US 2012/0235891 A1 produzieren beide Lichtquellen 4R und 18 Licht mit einem schmalen Beleuchtungswinkel, wobei das Licht von der hinteren Lichtquelle 18 erst aufwendig in Licht mit einem großen Beleuchtungswinkel umgewandelt wird. Diese komplexe Umwandlung ist - wie weiter oben schon bemerkt - stark helligkeitsmindernd.

Gemäß der JP 2007-155783 A werden spezielle, aufwendig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

In der US 2013/0308185 A1 wird ein spezieller, mit Stufen ausgebildeter Lichtleiter beschrieben, der Licht auf einer Großfläche in verschiedene Richtungen abstrahlt, je nachdem, aus welcher Richtung er von einer Schmalseite aus beleuchtet wird. Im Zusammenspiel mit einem transmissiven Bildwiedergabeeinrichtung, z.B. einem LC-Display, kann somit ein zwischen freiem und eingeschränktem Sichtmodus schaltbarer Bildschirm erzeugt werden. Nachteilig ist hierbei u.a., dass der eingeschränkte Sichteffekt entweder nur für links/rechts oder aber für oben/unten, nicht aber für links/rechts/oben/unten gleichzeitig erzeugt werden kann, wie es etwa für bestimmte Zahlungsvorgänge nötig ist. Hinzu kommt, dass auch im eingeschränkten Sichtmodus aus blockierten Einblickwinkeln immer noch ein Restlicht sichtbar ist.

Die WO 2015/121398 A1 der Anmelderin beschreibt einen Bildschirm mit zwei Betriebsarten, bei dem für die Umschaltung der Betriebsarten Streupartikel im Volumen des entsprechenden Lichtleiters vorhanden sind. Die dort gewählten Streupartikel aus einem Polymerisat weisen jedoch in der Regel den Nachteil auf, dass Licht aus beiden Großflächen ausgekoppelt wird, wodurch etwa die Hälfte des Nutzlichtes in die falsche Richtung, nämlich zur Hintergrundbeleuchtung hin, abgestrahlt und dort aufgrund des Aufbaus nicht in hinreichendem Umfang recycelt werden kann. Überdies können die im Volumen des Lichtleiters verteilten Streupartikel aus Polymerisat unter Umständen, insbesondere bei höherer Konzentration, zu Streueffekten führen, die den Sichtschutzeffekt in der geschützten Betriebsart vermindern. Bildschirme, die zwischen einem öffentlichen Modus mit weitem Blickwinkelbereich sowie einem privaten Modus, in welchem der Blickwinkelbereich, aus dem dargestellter Inhalt wahrnehmbar ist, gegenüber dem öffentlichem Modus eingeschränkt ist, werden beispielsweise in der US 2020/0026114 A1 und in der US 10,649,248 B1 beschrieben.

Der Ansatz der Technologie der "Elektrischen Doppelbrechung (EDB)" beruht auf der Idee, die schaltbaren Flüssigkeitskristalle eines zusätzlich aufgebrachten LC-Panels zur "Filterung" aller nicht in einem bestimmten Abstrahlwinkel aus der bildgebenden Schicht austretenden Lichtstrahlen zu nutzen. Nachteile dieser Technologie sind ein hoher zusätzlicher Energie- und Kostenaufwand und der schwer veränderbare +/-40° Sweet Spot, d.h. die bestmögliche Blickposition. Der Absorptionsgrad der LC-Strukturen ist ebenfalls unzureichend, da die Abschwächung der Lichtintensität für Betrachtungswinkel größer des Sweetspots wieder ansteigt, so dass die Lichtintensität für Betrachtungswinkel größer als +/-40° bis zu 3% von der maximalen Lichtintensität beträgt.

Den vorgenannten Verfahren und Anordnungen ist in der Regel der Nachteil gemein, dass sie die Helligkeit des Grundbildschirms deutlich reduzieren und/oder ein aufwendiges und teures optisches Element zur Modi-Umschaltung benötigen und/oder die Auflösung im frei betrachtbaren, öffentlichen Modus reduzieren und/oder visuelle Artefakte bei sehr hoch auflösenden Displays aufweisen.

### Beschreibung der Erfindung

Die Aufgabe der Erfindung ist es daher, einen schaltbaren Lichtfilter mit einem optischen Element zu beschreiben, bei dem Licht, welches in das optische Element einfällt, in Abhängigkeit von seiner Einfallsrichtung und seinen Polarisationseigenschaften - nicht aber in Abhängigkeit von seiner Position - transmittiert oder teilweise oder ganz absorbiert wird. Durch die schaltbaren Lichtfilter, welche das optische Element verwenden, soll die Transmission von Licht winkelabhängig - optional in Bezug auf einen sitzenden oder stehenden Betrachter senkrecht - beeinflusst werden, wobei hier zwischen mindestens zwei Betriebszuständen umgeschaltet werden kann. Dabei sollen insbesondere Winkeleinschränkungen in der Transmission in bestimmte Richtungen umschaltbar sein.

Das optische Element bzw. darauf basierende Systeme sollen preiswert umsetzbar und insbesondere mit verschiedenartigen Bildschirmtypen universell verwendbar sein, um eine Umschaltung zwischen einem - mindestens in der in Bezug auf einen stehenden oder sitzenden Betrachter horizontalen Richtung bestehenden - Sichtschutz, d.h. einem eingeschränkten Betrachtungsmodus, und einem freien Betrachtungsmodus zu ermöglichen, wobei die Auflösung eines solchen Bildschirms im Wesentlichen nicht herabgesetzt werden soll.

Diese Aufgabe wird in einer ersten Ausgestaltung durch einen schaltbaren Lichtfilter gemäß Anspruch 1 gelöst, welcher ein erstes optisches Element umfasst, welches seinerseits nicht schaltbar ist. Das optische Element seinerseits umfasst eine erste Schicht oder eine erste Schicht und mehrere weitere, bevorzugt mehr als fünf Schichten. Jede der Schichten umfasst ein Material mit einer Vielzahl an Licht absorbierenden Übergangsdipolmomenten, wobei jedes Übergangsdipolmoment mindestens in einem ersten Zustand mit einer Toleranz von maximal 10° parallel zu einer für das erste optische Element wählbaren ersten Vorzugsrichtung ausgerichtet ist oder um diese herum fluktuiert, so dass Licht, welches in das erste optische Element einfällt, in Abhängigkeit von seiner Einfallsrichtung gegenüber den Schichten und seines Polarisationszustandes transmittiert oder mindestens teilweise absorbiert wird.

Das Übergangsdipolmoment - auch als Übergangsmatrixelement bezeichnet - ist eine quantenmechanische Vektorgröße und einem spezifischen Übergang zwischen einem Ausgangszustand - in der Regel dem Grundzustand - und einem Endzustand - in der Regel einem angeregten Zustand - eines Systems, d.h. eines Atoms, Moleküls oder Festkörpers zugeordnet und entspricht dem elektrischen Dipolmoment, welches mit diesem Übergang verbunden ist. Die Richtung des Vektors definiert die Polarisation des Übergangs, welche ihrerseits bestimmt, wie das System mit einer elektromagnetischen Welle, mit vorgegebener Polarisation wechselwirkt, beim Übergang vom Grundzustand in den angeregten Zustand beispielsweise Licht der entsprechenden Polarisationsrichtung absorbiert. Der Betrag des Vektors korrespondiert zur Stärke der Wechselwirkung bzw. zur Übergangswahrscheinlichkeit.

Die erste Vorzugsrichtung entspricht dabei derjenigen Ausrichtung der Übergangsdipolmomente bei vorgegebener Ausbreitungsrichtung von Licht, bei der für beliebige Polarisationsrichtungen des Lichts die Absorption gleich ist. Die Vorzugsrichtung ist die Ausrichtung der Übergangsdipole im Medium, d.h. für die Ausbreitung in dem Medium in dieser Richtung ist die Absorption minimal in einem noch weiter unten beschriebenen sichtgeschützten Betriebsmodus.

Als Materialien im Sinne der Erfindung, welche ausrichtbare Übergangsdipolmomente enthalten, kommen beispielsweise dichroitische Farbstoffe oder Farbstoffmischungen in Frage, welche mit einem die Eigenschaften nicht beeinträchtigenden Trägermaterial kombiniert werden, beispielsweise mit Flüssigkristallen oder Polymeren. Jede der Schichten kann beispielsweise nur einen Farbstoff enthalten, wobei sich die Farbstoffe bezogen auf die verschiedenen Schichten paarweise voneinander unterscheiden. Es können aber auch mehrere Farbstoffe, d.h. Farbstoffmischungen, in einer einzigen Schicht enthalten sein.

Der schaltbare Lichtfilter umfasst außerdem einen Polarisationsfilter, welcher dem ersten optischen Element in der Einfallsrichtung gesehen vor- oder nachgeordnet ist, sowie Mittel zur wahlweisen Erzeugung eines ersten elektrischen Feldes oder eines zweiten elektrischen Feldes. Zwischen dem ersten optischen Element und dem Polarisationsfilter ist eine Flüssigkristallschicht angeordnet, auf welche das erste elektrische Feld oder das zweite elektrische Feld wirkt und die in Abhängigkeit davon den Polarisationszustand von durch sie hindurchdringendem Licht beeinflusst. Der schaltbare Lichtfilter ist in mindestens zwei Betriebsarten betreibbar, wobei in einer ersten Betriebsart B1, in welcher das erste elektrische Feld anliegt, mit einer ersten Unterbetriebsart UBH und einer zweiten Unterbetriebsart UBV, einerseits unpolarisiertes Licht, welches parallel zur ersten Vorzugsrichtung in den schaltbaren Lichtfilter einfällt, zu mindestens 24% transmittiert und andererseits unpolarisiertes Licht, welches in einem Winkel von mehr als 30° zu der ersten Vorzugsrichtung in den schaltbaren Lichtfilter einfällt, zu mindestens 85% absorbiert wird, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt. In einer zweiten Betriebsart B2 hingegen, in welcher das zweite elektrische Feld anliegt, mit der ersten Unterbetriebsart UBH und der zweiten Unterbetriebsart UBV, wird einerseits unpolarisiertes Licht, welches parallel zu der ersten Vorzugsrichtung in den schaltbaren Lichtfilters einfällt, zu mindestens 24% transmittiert und wird andererseits unpolarisiertes Licht, welches in einem Winkel von mehr als 30° zu der ersten Vorzugsrichtung in den schaltbaren Lichtfilter (5) einfällt, zu mindestens 85% absorbiert, wobei diese Absorption in der ersten Unterbetriebsart UBH ausschließlich in der zweiten Richtung und in der zweiten Unterbetriebsart UBV ausschließlich in der zur ersten Richtung senkrechten zweiten Richtung erfolgt, so dass die Richtungen der Absorption für jede der beiden Unterbetriebsarten UBH, UBV sich für die erste Betriebsart B1 und die zweite Betriebsart B2 und damit auch für die beiden Betriebsarten B1 und B2 um jeweils 90° unterscheiden. Die Absorption erfolgt jeweils ausschließlich nur in einer Richtung, d. h. das Licht wird in der jeweils anderen Richtung transmittiert.

In der ersten Betriebsart B1 in der Unterbetriebsart UBH kann die Absorption beispielsweise in horizontaler Richtung, bezogen auf einen sitzenden oder stehenden Betrachter bzw. allgemein auf die Lage der Augen, erfolgen und in der Unterbetriebsart UBV in vertikaler Richtung, auch hier bezogen auf einen sitzenden oder stehenden Betrachter bzw. allgemein auf die Lage der Augen. Eine beide Augen verbindende gerade Linie definiert dann die horizontale Richtung und korrespondiert zur ersten Richtung, während die vertikale Richtung senkrecht auf der horizontalen Richtung steht und zur zweiten Richtung korrespondiert. Entsprechend würde in der zweiten Betriebsart B2 in der Unterbetriebsart UBH die Absorption in vertikaler Richtung und in der Unterbetriebsart UBV in horizontaler Richtung erfolgen.

Die Konfiguration dieser ersten Ausgestaltung eines schaltbaren Lichtfilters kann durch Rotation des Polarisationsfilters um 90° zwischen den Betriebsarten B1 und B2 bzw. UBH und UBV wechseln.

Dabei ist es möglich, dass zum Beispiel entweder das erste elektrische Feld oder das zweite elektrische Feld einen feldfreien Zustand beschreibt, wobei das jeweils andere elektrische Feld eine absolute Feldstärke größer als Null, z.B. 0,5 MV/m, aufweist. Dabei kann der feldfreie Zustand je nach Ausgestaltung des ersten optischen Elements und des Polarisationsfilters bedeuten, dass die Betriebsart B1 bzw. UBH vorliegt. Es ist aber auch möglich, dass im feldfreien Zustand die Betriebsart B2 bzw. UBV vorliegt.

Somit erlaubt der schaltbare Lichtfilter dieser erfindungsgemäßen ersten Ausgestaltung im Zusammenspiel mit einer Bildwiedergabeeinheit beispielsweise die Umschaltung zwischen einem Sichtschutz in der vertikalen und einem Sichtschutz in der horizontalen Richtung (in der Betriebsart B1 beispielsweise oben/unten geschützt in der Unterbetriebsart UBV vs. links/rechts geschützt in der Unterbetriebsart UBH). Etwa in einem Laptop würde dies bedeuten, dass ein Nutzer die Inhalte in der Betriebsart B1 in der Unterbetriebsart UBV mit weiteren Personen, die neben dem Nutzer befindlich und im Wesentlichen mit gleicher Augenhöhe angeordnet sind, gemeinsam anschauen kann, während in der Unterbetriebsart UBH die seitlich benachbarten Personen den Bildinhalt nicht sehen können.

Effektiv wird in der Betriebsart B1 der Abstrahlwinkelbereich, in den Licht abgestrahlt wird, jeweils vertikal in der Unterbetriebsart UBV bzw. horizontal in der Unterbetriebsart UBH beschnitten, d.h. verkleinert. In der Betriebsart B2 ist die Zuordnung umgekehrt. Beides sind Betriebsarten mit einem in einer Richtung eingeschränkten Abstrahlwinkelbereich.

Der schaltbare Lichtfilter dieser ersten Ausgestaltung kann in seinem Aufbau variiert werden. In der folgenden Tabelle 1 sind einige wesentliche Aufbauvarianten gegeben. Dabei ist jeweils die erstgenannte Komponente in Betrachter zugewandt und die anderen folgen danach. Die Abkürzung "L/R" bedeutet in diesem Falle, dass die optische Wirkung in horizontaler Wirkung (mit der weiter oben bereits definierten horizontalen Richtung) aktiv ist. Für den Polarisationsfilter bedeutet dies, dass er horizontal linear polarisiertes Licht transmittiert und vertikales linear polarisiertes Licht (im Wesentlichen) absorbiert. Entsprechend bedeutet "O/U" für den Polarisationsfilter, dass er vertikal linear polarisiertes Licht transmittiert und horizontal linear polarisiertes Licht (im Wesentlichen) absorbiert. Für den resultierenden Effekt dieses schaltbaren Filters im Zusammenspiel mit einer Bildwiedergabeeinheit, die vor oder hinter dem schaltbaren Filter angeordnet sein kann, bedeutet die Abkürzung "L/R" hingegen, dass der Sichtschutzeffekt horizontal wirkt, dass also ein Einblick von links und rechts gehindert wird. Dies entspricht schließlich der Betriebsart B1 in der Unterbetriebsart UBH des schaltbaren Filters. Analog bedeutet "O/U" für den schaltbaren Filter im Zusammenspiel mit einer Bildwiedergabeeinheit, dass der Sichtschutzeffekt vertikal wirkt, dass also ein Einblick von oben und unten gehindert wird. Dies entspricht der Betriebsart B1 in der Unterbetriebsart UBV des schaltbaren Filters.

**Tabelle 1:**

| Aufbau | Feldfrei (Betriebsart B1): Effekt im Zusammenspiel mit einer Bildwiedergabeeinheit | Feld anliegend (Betriebsart B2): Effekt im Zusammenspiel mit einer Bildwiedergabeeinheit |
|---|---|---|
| Polarisationsfilter (O/U) Flüssigkristallschicht optisches Element | Sichtschutzeffekt (L/R) - UBH | Sichtschutzeffekt (O/U) - UBH |
| Polarisationsfilter (L/R) Flüssigkristallschicht optisches Element | Sichtschutzeffekt (O/U) - UBV | Sichtschutzeffekt (L/R) - UBV |
| optisches Element Flüssigkristallschicht Polarisationsfilter (L/R) | Sichtschutzeffekt (O/U) - UBV | Sichtschutzeffekt (L/R) - UBV |
| optisches Element Flüssigkristallschicht Polarisationsfilter (O/U) | Sichtschutzeffekt (L/R) - UBH | Sichtschutzeffekt (O/U) - UBH |

In den gennannten Beispielen in Tabelle 1 ist die Flüssigkristallschicht eine um 90° gedrehte nematische Flüssigkristallschicht, d.h. die bevorzugte Orientierung der Flüssigkristalle an den beiden Oberflächen, die die Orientierung induzieren und die Flüssigkristallschicht begrenzen, ist orthogonal zueinander. Im Falle der letzten Zeile der Tabelle wird im Zustand B1 durch den Polarisator das einfallende Licht linear entlang der vertikalen Richtung polarisiert (O/U). Anschließend wird die lineare Polarisation durch die Flüssigkristallschicht um 90° gedreht und ist dann horizontal orientiert (L/R). Je kleiner der Winkel zwischen der horizontalen Richtung und der Einfallsrichtung wird, desto geringer ist die Transmission des Lichts. Das begründet den Sichtschutz entlang der horizontalen Richtung (L/R). Im Falle des Zustands B2 gelten die analogen Zusammenhänge, jedoch entfällt die Polarisationsänderung um 90°.

Es sei hier nochmals darauf hingewiesen, dass der Sichtschutzeffekt "O/U" in vielen praktischen Fällen eine normale Betrachtung für mehrere Betrachter erlaubt, wenn diese in etwa aus gleicher Höhe seitlich auf die Bildwiedergabeeinheit schauen.

Die Aufgabe wird auch durch eine zweite, nicht erfindungsgemäße Ausgestaltung eines schaltbaren Lichtfilters gelöst. Dieser enthält ebenfalls ein erstes optisches Element, welches analog zum ersten optischen Element der ersten Ausgestaltung aufgebaut ist, jedoch schaltbar ist und zusätzlich noch das Merkmal aufweist, dass die Übergangsdipolmomente in jeder der Schichten in ihrer Ausrichtung und/oder ihrem Betrag zwischen dem ersten und mindestens einem zweiten Zustand variiert werden können, um die jeweilige Schicht alternativ in mindestens zwei verschiedene Zustände versetzen zu können. Auch hier ist ein Polarisationsfilter dem ersten optischen Element vor- oder nachgeordnet. Der schaltbare Lichtfilter gemäß der zweiten Ausgestaltung umfasst außerdem Mittel zur wahlweisen Erzeugung eines ersten elektrischen Feldes oder eines zweiten elektrischen Feldes, wobei für das erste optische Element der erste Zustand durch Anlegen des ersten elektrischen Feldes und der zweite Zustand durch Anlegen des zweiten elektrischen Feldes erzeugt wird.

Dabei liegt in einer ersten Betriebsart B1 das erste elektrische Feld an und die Übergansdipolmomente der Schichten des ersten optischen Elements sind entlang der ersten Vorzugsrichtung ausgerichtet. Typischerweise werden die elektrischen Felder für diesen schaltbaren Lichtfilter als auch für alle anderen vorangehend oder im Folgenden beschriebenen schaltbaren Lichtfilter mit Rechteckspannung mit V_{RMS} < 10 V und einer Frequenz von 1 kHz erzeugt. Die erste Betriebsart B1 umfasst eine erste Unterbetriebsart UBH und eine zweite Unterbetriebsart UBV. In der ersten Betriebsart B1 wird einerseits unpolarisiertes Licht, welches parallel zur ersten Vorzugsrichtung in den schaltbaren Lichtfilter einfällt, zu mindestens 24% transmittiert, und andererseits unpolarisiertes Licht, welches in einem Winkel von mehr als 30° zu der ersten Vorzugsrichtung in den schaltbaren Lichtfilter gemäß der zweiten Ausgestaltung einfällt, zu mindestens 85% absorbiert, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt.

In einer zweiten Betriebsart B3 liegt das zweite elektrische Feld an und sind die Übergangsdipolmomente der Schichten des ersten optischen Elements (1) parallel zu einer Oberfläche des Polarisationsfilters und senkrecht zu einer Transmissionsrichtung des Polarisationsfilters ausgerichtet. In diesem Falle wird unpolarisiertes Licht, welches in einem beliebigen Winkel zu der ersten Vorzugsrichtung in den schaltbaren Lichtfilter einfällt, zu mindestens 24% transmittiert.

Auch hierbei ist es wiederum möglich, dass zum Beispiel entweder das erste elektrische Feld oder das zweite elektrische Feld einen feldfreien Zustand beschreibt, wobei das jeweils andere elektrische Feld eine absolute Feldstärke größer Null, z.B. 0,5 V/m, aufweist. Dabei kann der feldfreie Zustand je nach Ausgestaltung des optischen Elements und des Polarisationsfilters bedeuten, dass die Betriebsart B3 vorliegt. Es ist aber auch möglich, dass im feldfreien Zustand die Betriebsart B1 und eine der Unterbetriebsarten UBH oder UBV vorliegt.

Somit erlaubt der schaltbare Lichtfilter dieser zweiten Ausgestaltung im Zusammenspiel mit einer Bildwiedergabeeinheit, wenn man in Analogie zur ersten Ausgestaltung die erste Richtung mit der horizontalen Richtung und die zweite Richtung mit der vertikalen Richtung identifiziert, die Umschaltung zwischen einem Sichtschutz in der vertikalen Richtung - in der Unterbetriebsart UBV durch einen eingeschränkten Abstrahlwinkelbereich gegen Einblicke von oben/unten geschützt - bzw. der horizontalen Richtung - in der Unterbetriebsart UBH durch einen eingeschränkten Abstrahlwinkelbereich gegen Einblicke von links und rechts geschützt - einerseits und keinem Sichtschutzeffekt - in der Betriebsart B3, in welcher der Abstrahlwinkelbereich nicht eingeschränkt und deutlich größer als in der Betriebsart B1 mit den beiden Unterbetriebsarten UBV und UBH andererseits ist. Anders als bei der ersten Ausgestaltung realisiert die Betriebsart B3 hier einen in allen Richtungen freien Sichtmodus.

In einer dritten, nicht erfindungsgemäßen Ausgestaltung umfasst der schaltbare Lichtfilter ein erstes und ein zweites optisches Element, welche selbst nicht schaltbar sind. Jedes der beiden optischen Elemente, deren Aufbau und Funktionsweise weiter unten erläutert wird, umfasst dabei eine erste Schicht oder eine erste Schicht und mehrere weitere, bevorzugt mehr als fünf Schichten. Jede der Schichten umfasst ein Material mit einer Vielzahl an Licht absorbierenden Übergangsdipolmomenten. Jedes Übergangsdipolmoment ist mindestens in einem ersten Zustand mit einer Toleranz von maximal 10° parallel zu einer für das erste optische Element wählbaren ersten Vorzugsrichtung und für das zweite optische Element wählbaren zweiten Vorzugsrichtung ausgerichtet oder fluktuiert um diese herum. Die erste und zweite Vorzugsrichtung unterscheiden sich um weniger als 40°, bevorzugt um weniger als 20°, besonders bevorzugt weniger als 10° voneinander, was den Fall einschließt, dass sie auch identisch sein können, sich also um 0° voneinander unterscheiden. Licht, welches in das erste oder zweite optische Element einfällt, wird in Abhängigkeit von seiner Einfallsrichtung gegenüber den Schichten und seines Polarisationszustandes transmittiert oder mindestens teilweise absorbiert.

Zwischen dem ersten optischen Element und dem zweiten optischen Element ist eine Flüssigkristallschicht angeordnet, die in Abhängigkeit von einem auf sie wirkenden ersten elektrischen Feld oder zweiten elektrischen Feld den Polarisationszustand durch sie hindurchdringenden Lichtes beeinflusst. Der schaltbare Lichtfilter in seiner dritten Ausgestaltung umfasst entsprechend auch Mittel zur wahlweisen Erzeugung des ersten oder zweiten elektrischen Feldes, beispielsweise transparente ITO-Elektroden (ITO - Indium Tin Oxide, Indiumzinnoxid). Außerdem umfasst er wahlweise entweder einen Polarisationsfilter, welcher dann oberhalb oder unterhalb einer die beiden optischen Elemente umfassenden Einheit angeordnet ist, oder keinen Polarisationsfilter.

Für den Fall, dass ein Polarisationsfilter vorhanden ist, wird in einer ersten Betriebsart B1, in welcher das erste elektrische Feld anliegt, mit einer ersten Unterbetriebsart UBH und einer zweiten Unterbetriebsart UBV, einerseits unpolarisiertes Licht, welches parallel zur ersten Vorzugsrichtung oder zur zweiten Vorzugsrichtung in den schaltbaren Lichtfilter einfällt, zu mindestens 24% transmittiert und andererseits unpolarisiertes Licht, welches in einem Winkel von über 30° zu der entsprechenden Vorzugsrichtung in den schaltbaren Lichtfilter einfällt, zu mindestens 85% absorbiert, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt, wobei entweder die erste oder die zweite Richtung senkrecht zu einer Polarisationsrichtung des Polarisationsfilters steht.

Für den alternativen Fall, dass kein Polarisationsfilter vorhanden ist, wird in einer ersten Betriebsart B1, in welcher das erste elektrische Feld anliegt, unpolarisiertes Licht, welches in einem beliebigen Winkel in den schaltbaren Lichtfilter einfällt, zu mindestens 24% transmittiert wird.

Unabhängig davon, ob ein Polarisationsfilter vorhanden ist oder nicht, wird in einer zweiten Betriebsart B2, in welcher das zweite elektrische Feld anliegt, einerseits unpolarisiertes Licht, welches parallel zur ersten Vorzugsrichtung oder zur zweiten Vorzugsrichtung in den schaltbaren Lichtfilter einfällt, zu mindestens 24% transmittiert und andererseits unpolarisiertes Licht, welches in einem Winkel von mehr als 30° zu der entsprechenden Vorzugsrichtung in den schaltbaren Lichtleiter einfällt, zu mindestens 85% absorbiert.

Wie bereits erwähnt, können die beiden Vorzugsrichtungen der beiden optischen Elemente identisch oder bis zu einem Winkel von 40°, bevorzugt 20° oder nur 10° unterschiedlich voneinander sein. Wenn beide Vorzugsrichtungen beispielsweise zur Flächennormale des als Schichtkörper aufgebauten Lichtfilters parallel sind, so wird der Abstrahlwinkelbereich, welcher einem Blickwinkelbereich entspricht, auf den Bereich um die Flächennormale eingeschränkt, da die Transmission jeweils in der Vorzugsrichtung maximal ist. Durch Verkippen einer oder beider Vorzugsrichtungen wird daher auch der Winkel verkippt, in welchem die Transmission maximal ist, und entsprechend auch der eingeschränkte Blickwinkelbereich.

In dem Fall, dass unpolarisiertes Licht in das erste optische Element einfällt und anschließend eine Polarisationsdrehung durch die Flüssigkristallschicht im feldfreien Zustand um 90° stattfindet, wird der Blickwinkelbereich nach links, recht, oben und unten eingeschränkt. Wird nun das elektromagnetische Feld eingeschaltet, so erfolgt keine Drehung der Polarisation des Lichts und es erfolgt auch keine Einschränkung des Blickwinkelbereichs, jedoch ist das Licht senkrecht zur Projektion des Lichteinfallsvektors auf die Lichteinfallsebene polarisiert. Wird das Licht, das in das erste optische Element einfällt, durch einen Polarisator linear polarisiert, erfolgt im feldfreien Zustand eine Blickwinkeleinschränkung nach oben, unten, rechts und links. Wird nun ein Feld angelegt, so wird der Blickwinkel parallel zu der linearen Polarisation des Lichts, welches in das erste optische Element einfällt, eingeschränkt.

Somit erlaubt der schaltbare Lichtfilter der dritten Ausgestaltung im Zusammenspiel mit einer Bildwiedergabeeinheit die Umschaltung entweder zwischen einem zweiseitigen Sichtschutz - beispielsweise in der Unterbetriebsart UBV einen Sichtschutz nach oben und unten - und einem vierseitigen Sichtschutz - in der Betriebsart B2 ist der Blickwinkelbereich in allen vier Richtungen oben/unten/links/rechts eingeschränkt -, wenn ein Polarisationsfilter vorhanden ist, oder, wenn kein Polarisationsfilter P vorhanden ist, die Umschaltung entweder zwischen einer in alle Richtungen freien Betrachtung mit uneingeschränktem Blickwinkelbereich in der Betriebsart B1 und einem vierseitigen Sichtschutz in der Betriebsart B2. Mit zusätzlichen Verzögerungsplatten kann Einfluss auf die Polarisationszustände genommen werden. Wird beispielsweise ein λ/4-Plättchen genutzt, wird linear polarisiertes Licht in zirkular polarisiertes Licht umgewandelt und es kann zwischen vierseitigem Sichtschutz und uneingeschränkter Sicht umgeschaltet werden.

Dabei ist es möglich, dass zum Beispiel entweder das erste elektrische Feld oder das zweite elektrische Feld einen feldfreien Zustand beschreibt, wobei das jeweils andere elektrische Feld eine absolute Feldstärke größer als Null, z.B. 0,5 MV/m, aufweist. Dabei kann der feldfreie Zustand je nach Ausgestaltung der beiden optischen Elemente bedeuten, dass die Betriebsart B2 vorliegt. Es ist aber auch möglich, dass im feldfreien Zustand eine der Betriebsarten B1 - ohne Polarisator - bzw. der Unterbetriebsarten UBH, UBV - mit Polarisator - vorliegt.

In einer vierten, nicht erfindungsgemäßen Ausgestaltung umfasst der schaltbare Lichtfilter ebenfalls ein erstes und ein zweites optisches Element, welche anders als bei der dritten Ausgestaltung schaltbar sind. Jedes der beiden optischen Elemente umfasst dabei eine erste Schicht oder eine erste Schicht und mehrere weitere, bevorzugt mehr als fünf Schichten. Jede der Schichten umfasst ein Material mit einer Vielzahl an Licht absorbierenden Übergangsdipolmomenten. Jedes Übergangsdipolmoment ist mindestens in einem ersten Zustand mit einer Toleranz von maximal 10° parallel zu einer für das erste optische Element (1) wählbaren ersten Vorzugsrichtung und für das zweite optische Element (2) wählbaren zweiten Vorzugsrichtung ausgerichtet oder fluktuiert um diese herum. Licht, welches in das erste oder zweite optische Element einfällt, wird in Abhängigkeit von seiner Einfallsrichtung gegenüber den Schichten und seines Polarisationszustandes transmittiert oder mindestens teilweise absorbiert. Im Unterschied zur dritten Ausgestaltung können hier die Übergangsdipolmomente in jeder der Schichten in ihrer Ausrichtung und/oder ihrem Betrag zwischen dem ersten und mindestens einem zweiten Zustand variiert werden, um die jeweilige Schicht alternativ in mindestens zwei verschiedene Zustände zu versetzen.

Auch in der vierten Ausgestaltung des schaltbaren Lichtfilters umfasst dieser Mittel zur wahlweisen Erzeugung eines ersten elektrischen Feldes oder eines zweiten elektrischen Feldes, wobei für jedes der beiden optischen Elemente der erste Zustand durch Anlegen des ersten elektrischen Feldes und der zweite Zustand durch Anlegen des zweiten elektrischen Feldes erzeugt wird. Beide elektrischen Felder liegen dann gleichzeitig an beiden optischen Elementen an, wobei jedoch wieder eines der beiden Felder wieder einen feldfreien Zustand bedeuten kann. Zwischen den beiden optischen Elementen ist eine optische anisotrope Schicht angeordnet, welche eine Polarisationsrichtung von Licht, das die Ausrichtungsschicht durchdringt, um 90° rotiert. Diese Ausrichtungsschicht besteht beispielsweise aus einem uniaxial-gedrehtem Material - analog zu einer TN-Zelle (TN = twisted nematic), auch bezeichnet als Schadt-Helfrich-Zelle - und/oder aus einem optisch aktiven Material.

Wahlweise kann oberhalb oder unterhalb der beiden optischen Elemente - als Einheit verstanden - ein Polarisationsfilter oder kein Polarisationsfilter angeordnet sein. Der Polarisationsfilter ist nicht notwendig, kann aber die Leistungsfähigkeit des schaltbaren Lichtfilters verbessern. Die Polarisation des Polarisationsfilters und die des einfallenden Lichtes müssen kongruent sein.

Bei dieser vierten Ausgestaltung wird dann in einer ersten Betriebsart B1, in welcher das erste elektrische Feld anliegt, unpolarisiertes Licht, welches in einem beliebigen Winkel zum schaltbaren Lichtfilter in diesen einfällt, zu mindestens 24% transmittiert, wobei in der ersten Betriebsart B1 die Übergangsdipolmomente der beiden optischen Elemente senkrecht zueinander ausgerichtet sind und, falls ein Polarisationsfilter vorhanden ist, Polarisationsfilter-Übergangsdipolelemente des Polarisationsfilters zu den Übergangsdipolmomenten des dem Polarisationsfilters nächstliegenden schaltbaren optischen Elements parallel ausgerichtet sind. In einer zweiten Betriebsart B2 hingegen, in welcher das zweite elektrische Feld anliegt, wird einerseits unpolarisiertes Licht, welches parallel zur ersten Vorzugsrichtung oder zur zweiten Vorzugsrichtung in den schaltbaren Lichtleiter einfällt, zu mindestens 24% transmittiert und andererseits unpolarisiertes Licht, welches in einem Winkel von mehr als 30° zu der entsprechenden Vorzugsrichtung in den schaltbaren Lichtleiter einfällt, zu mindestens 85% absorbiert, wobei in der Betriebsart B2 die Übergangsdipolmomente des Polarisationsfilters, wenn vorhanden, und die Übergangsdipolmomente des dem Polarisationsfilters nächstliegenden schaltbaren optischen Elements senkrecht zueinander und die Übergangsdipolmomente der beiden optischen Elemente jeweils parallel zueinander ausgerichtet sind.

Somit erlaubt der schaltbare Lichtfilter dieser vierten Ausgestaltung im Zusammenspiel mit einer Bildwiedergabeeinheit die Umschaltung zwischen einer in alle Richtungen freien Betrachtung im öffentlichen bzw. freien Betriebsmodus B1 und einem vierseitigen Sichtschutz bezogen auf eine Vorzugsrichtung nach - oben, unten, rechts und links - im privaten bzw. eingeschränkten Betriebsmodus B2 bei gegenüber dem Betriebsmodus B1 eingeschränkten Blickwinkel- bzw. Abstrahlwinkelbereich. Wenn unpolarisiertes Licht im privaten Betriebsmodus B2 auf den schaltbaren Lichtfilter trifft, so wird dabei Licht, dass nicht in etwa parallel zu den Vorzugsrichtungen - die vorzugsweise im Betriebsmodus B2 parallel ausgerichtet sind - einfällt, absorbiert. Im öffentlichen Betriebsmodus B1 wird linear polarisiertes Licht transmittiert.

In einer bevorzugten Ausführung der ersten oder dritten Ausgestaltung ist der Flüssigkristallschicht mindestens eine Polarisationskompensationsschicht vor- und/oder nachgeordnet. Damit kann ausgeglichen werden, dass die Änderung der Polarisation einerseits von Licht, das senkrecht einfällt und anderseits von Licht, das unter einem Winkel zur Flächennormale einfällt, unterschiedlich ist.

Vorzugsweise schließen die Vorzugsrichtungen jeweils einen Winkel zwischen 0° und 45° zu einer Flächennormale der ersten Schicht ein. Dies deckt die üblichen Blickwinkel - beispielsweise auf einen Bildschirm mit dem schaltbaren Lichtfilter - ab.

Für besondere Anwendungsfälle kann der schaltbare Lichtfilter - unabhängig in welcher der vorgenannten Ausgestaltungen - in mehrere, separat schaltbare Segmente unterteilt sein, so dass eine lokale Umschaltbarkeit zwischen den jeweils möglichen Betriebszuständen ermöglicht wird. Im Zusammenspiel mit einer Bildwiedergabeeinheit würde dies heißen, dass beispielsweise nur ein Teil der Bildfläche zwischen einem privaten Modus für Sichtschutz und einem öffentlichen Modus mit keinem Sichtschutzeffekt, also für freie Sicht umgeschaltet werden kann, während der dazu komplementäre Teil der Bildfläche permanent in einem Sichtschutzmodus oder in keinem Sichtschutzmodus befindlich ist. Es können sogar mehrere, voneinander geometrisch getrennte, solche Segmente vorhanden sein, die separat oder gemeinsam zwischen den Betriebsarten umgeschaltet werden können.

Jede der Schichten des ersten optischen Elements und/oder, falls vorhanden, des zweiten optischen Elements ist vorzugsweise außerdem nicht-periodisch aufgebaut. Dies verringert das Auftreten von visuellen Artefakten, die ein Betrachter eines entsprechenden Bildschirms als störend wahrnehmen könnte, beispielsweise Moiré-Streifen.

Die Erfindung erlangt besondere Bedeutung durch Kombination eines vorbeschriebenen schaltbaren Lichtfilters mit einer Bildwiedergabeeinheit zu einem Bildschirm. Ein solcher Bildschirm umfasst neben einem schaltbaren Lichtfilter, wie er vorangehend beschrieben wurde, eine dem schaltbaren Lichtfilter von einem Betrachter aus gesehen nach- oder vorgeordnete Bildwiedergabeeinheit. Die Betriebsmodi des vorangehend beschriebenen schaltbaren Lichtfilters lassen sich ohne weiteres auf den Bildschirm übertragen, so dass auch dieser in den oben bereits erwähnten verschiedenen Betriebsmodi, je nach verwendeter Ausgestaltung des schaltbaren Lichtfilters, betrieben werden kann, beispielsweise mindesten in einem ersten Betriebsmodus für einen in horizontaler Richtung freien, öffentlich Sichtmodus mit uneingeschränktem Abstrahl- bzw. Blickwinkelbereich und einem in horizontaler Richtung eingeschränkten, privaten Sichtmodus mit in horizontaler Richtung gegenüber dem freien Sichtmodus eingeschränkten Abstrahl- bzw. Blickwinkelbereich, so dass Betrachter, die außerhalb dieses eingeschränkten Blickwinkelbereichs positioniert sind, nur im freien Sichtmodus Bildinhalte, welche auf dem Bildschirm dargestellt werden, wahrnehmen können.

Vorteilhaft entspricht die Bildwiedergabeeinheit einem LCD-Panel, dessen einer Polarisationsfilter dem Polarisationsfilter des schaltbaren Lichtfilters entspricht. Dabei kann es sich um den vorder- oder rückseitigen Polarisator im LCD-Aufbau handeln. Außerdem kann vorteilhaft der schaltbare Lichtfilter zwischen dem LCD-Panel und dessen Hintergrundbeleuchtung angeordnet sein, um zwischen einem ersten Betriebszustand für einen freien Sichtmodus und einem zweiten Betriebszustand für einen eingeschränkten Sichtmodus umzuschalten, weil das Licht der Hintergrundbeleuchtung aufgrund des schaltbaren Lichtfilters - beispielsweise bei Umschaltung in horizontaler Richtung - in horizontaler Richtung einmal fokussiert und einmal nicht fokussiert wird. Mit "Fokussierung" ist dabei nicht eine Fokussierung nach Art von Linsen gemeint, sondern eine Einengung des Abstrahlbereichs bzw. Transmissionsbereiches über die Winkel.

Bei der Bildwiedergabeeinheit kann es sich alternativ um ein OLED, einen Feldemissionsbildschirm (SED), einen Feldemissionsbildschirm (FED), ein microLED-Display oder eine Vakuum-Fluoreszenzanzeige (VFD) handeln, vor welchem ein schaltbarer Lichtfilter angeordnet ist. Da der schaltbare Lichtfilter unabhängig von der Art der Bildwiedergabeeinheit wirksam ist, kommen jedwede andere Bildschirmtypen ebenso in Frage.

Ein solcher Bildschirm findet vorteilhaft Verwendung in einem mobilen Gerät, einem Kraft-, Luft- oder Wasserfahrzeug, in einem Zahlterminal oder in einem Zugangssystem. Dabei kann zwischen den genannten Betriebsarten umgeschaltet werden, um sensitive Daten zu schützen, d.h. für nur einen Betrachter wahrnehmbar darzustellen, oder alternativ Bildinhalte gleichzeitig für mehrere Betrachter darzustellen.

Im Folgenden soll das nicht von der Erfindung umfasste optische Element, welches als erstes und/oder zweites optisches Element insbesondere in den vorangehend beschriebenen vier Ausgestaltungen des schaltbaren Lichtfilters zum Einsatz kommen kann, nochmals näher erläutert und mögliche Ausbildungsformen dargestellt werden.

Ein solches optische Element umfasst eine erste Schicht, oder eine erste Schicht und mehrere weitere Schichten, bevorzugt mehr als fünf Schichten, wobei jede der Schichten im Rahmen der Erfindung beispielsweise einer Moleküllage entsprechen kann; es kann sich aber auch um jeweils mechanisch separate Lagen eines geeigneten Materials handeln. Jede Schicht umfasst ein Material mit einer Vielzahl an Licht absorbierenden Übergangsdipolmomenten. Mögliche Materialien wurden bereits eingangs bei der Beschreibung des optischen Elements des schaltbaren Lichtfilters genannt. Jedes Übergangsdipolmoment ist mindestens in einem ersten Zustand mit einer Toleranz von maximal 10° parallel zu einer wählbaren Vorzugsrichtung ausgerichtet ist oder fluktuiert um diese herum, so dass Licht, welches in das optische Element einfällt, in Abhängigkeit von seiner Einfallsrichtung gegenüber den Schichten und seines Polarisationszustandes transmittiert oder mindestens teilweise - bis hin zu einschließlich vollständig - absorbiert wird. Vorzugsweise schließen die Vorzugsrichtungen jeweils einen Winkel zwischen 0° und 45° zu einer Flächennormale der ersten Schicht ein.

Die Extinktion, also die Absorption, des Lichtes ist von der absoluten Zahl der Übergangsdipolmomente - und somit inhärent auch von der Schichtdicke, in der sich die Übergangsdipolmomente befinden - und der Ausrichtung zwischen Übergangsdipolmoment und der Polarisation des einfallenden Lichtes zueinander abhängig. Je nach Implementierung kann die Dichte der besagten Übergangsdipolmomente, deren Stärke oder die Brechzahl in den Schichten des optischen Elements variieren. Bei einem passiven, also nicht schaltbaren optischen Element kann die Volumendichte der Übergangsdipole gegen 100% gehen.

Für die vereinfachte Modellierung der Transmission wird angenommen, dass die Übergangsdipolmomente im optischen Element parallel zur Einfallsebene des Lichts auf das optische Element orientiert sind und die Vorzugsrichtung der Mittelsenkrechten des optischen Elements entspricht. Die Einfallsebene bezeichnet dabei nicht die Oberfläche des optischen Elements, sondern eine Ebene, in welcher die Ausbreitungsrichtung der Lichtwelle liegt, wobei die Oberfläche des optischen Elements und die Einfallsebene einen rechten Winkel einschließen. Die Lichtwelle weist als Transversalwelle einen transversal-magnetischen Schwingungsanteil und einen transversal-elektrischen Schwingungsanteil, welche beide senkrecht zueinander und senkrecht zur Ausbreitungsrichtung stehen. Licht, welches auf das optische Element trifft, ist zwar in seiner Gesamtheit der Lichtwellen zunächst unpolarisiert, d.h. die Schwingungsrichtungen der transversal-elektrischen - und dementsprechend auch der transversal-magnetischen - Anteile sind statistisch verteilt. Beim Eintreffen auf die Oberfläche des optischen Elements mit den solchermaßen senkrecht zur Oberfläche des optischen Elements ausgerichteten Übergangsdipolmomenten tritt das Licht in Wechselwirkung mit dem optischen Element bzw. den Übergangsdipolmomenten des darin enthaltenen Materials und wird polarisiert. Dabei werden die Schwingungsanteile, welche in der Einfallsebene liegen, absorbiert. Licht, welches also parallel zur Einfallsebene polarisiert ist, d.h. transversal-magnetisch oder p-polarisiert ist, wird absorbiert, wohingegen Licht, welches senkrecht zur Einfallsebene - also parallel zur Oberfläche des optischen Elements - polarisiert ist, d.h. transversal-elektrisch oder s-polarisiert ist, wird hingegen vollständig transmittiert. Unpolarisiertes Licht, das das optische Element nicht parallel zu Übergangsdipolmomenten passiert, wird demnach bei Durchtritt durch das optische Element mit Übergangsdipolmomenten, die parallel zur Einfallsebene des Lichts ausgerichtet sind, wenigsten teilweise s-polarisiert. Entspricht die Vorzugsrichtung nicht der Mittelsenkrechten, so ist anstelle der s-Polarisation die o-Polarisation (gewöhnliche Polarisation, ordinary polarisation) und anstelle der p-Polarisation die e-Polarisation (außerordentliche Polarisation, extraordinary polarisation) zu betrachten.

Diese Eigenschaft ist essenziell bei allen Ausgestaltungen der Erfindung und stellt einen wesentlichen erfinderischen Mittel-Wirkungs-Zusammenhang dar. Im Folgenden wird die Transmission von p-polarisiertem Licht mit einer eingestrahlten Intensität *I*₀(*α*) modelliert. Die Transmission von Licht durch eine absorbierende Schicht wird durch das Lambert-Beersche Gesetz beschrieben:$I \left(α\right) = {I}_{0} \left(α\right) {e}^{- d \left(α\right) {Nσ}_{abs} \left(α\right)} .$

Hierin ist α der Propagationsrichtung relativ zur Flächennormale, *d*(*α*) die optische Weglänge in Abhängigkeit der Ausbreitungsrichtung, N die Anzahl von absorbierenden Molekülen und *σ_{abs}*(α) der Absorptionsquerschnitt in Abhängigkeit des Einfallswinkels. Mit Hilfe des Snellschen Brechungsgesetzes kann aus dem Einfallswinkel β der Propagationswinkel im Medium α berechnet werden. Daraus ergibt sich dann aus der Gleichung des Übergangsdipolmoments und der Änderung des optischen Weges:$I \left(α\right) = {I}_{0} \left(α\right) {e}^{- d / {Nσ}_{abs} sin {\left(α\right)}^{2}} .$

Je nach Anwendungsfall ist jede der Schichten in ihrer Struktur periodisch oder nicht-periodisch aufgebaut, wobei der nicht-periodische Aufbau vorteilhaft in Bezug auf die Vermeidung visueller Artefakte ist.

In einer bevorzugten Ausgestaltung ist jedes Übergangsdipolmoment in der jeweiligen Vorzugsrichtung innerhalb einer Toleranz von maximal 10° um diese ausgerichtet. Entlang der Vorzugsrichtung liegt dann auch der höchste Transmissionsgrad vor. Mindestens zwei solcher Vorzugsrichtungen in einer wählbaren Ebene - in der Regel in einer der Schichten - unterscheiden sich vorzugsweise auch um mehr als 10°. Dies ermöglicht es, mehrere Vorzugsrichtungen in einer Schicht zu definieren, die alle auf einen Punkt im Raum, beispielsweise einen Betrachter, ausgerichtet sein können, wobei die unterschiedliche Ausrichtung durch entsprechende Anpassungen der Materialeigenschaften innerhalb der Schichten erreicht werden kann, beispielsweise mittels Photoausrichtung. Dazu werden Flüssigkristalle mit photoreaktiven Substanzen kombiniert. Einstrahlendes polarisiertes Licht richtet gleichzeitig die Moleküle aus und löst eine Photoreaktion aus. Durch die Kontrolle der Polarisation lässt sich die Ausrichtung der Moleküle beeinflussen.

Die im Stand der Technik beschriebenen Mikrolamellenfilter (auch "View Control Filter - VCF" oder "Light Control Filter - LCF" genannt) machen sich die geometrische Optik zu nutze. Durch die abwechselnde periodische Anordnung von transparenten und absorbieren Schichten wird hier nahezu alles einfallende Licht absorbiert, das sich unter großen Winkeln relativ zu einer definierten Richtung ausbreitet. Es wird dort die *Position* der Absorber kontrolliert. Demgegenüber ändert sich bei dem erfindungsgemäßen optischen Element die Transmission von Licht mit unterschiedlichen Ausbreitungsrichtungen, da sich hierbei der Absorptionsquerschnitt der Moleküle mit der Ausbreitungsrichtung ändert. Es wird somit bei der Erfindung nicht die Position, sondern vielmehr die Orientierung (Ausrichtung) der Absorber kontrolliert. Mit anderen Worten: Die Erfindung basiert auf einer richtungsabhängigen Absorption der Lichtstrahlen bei der Passage durch ein erfindungsgemäßes optisches Element, und zwar grundsätzlich unabhängig von der Position der Lichtstrahlen - einmal abgesehen von den für die Übergangsdipolmomente jeweils vorgegebenen Vorzugsrichtungen. Dies gilt sowohl für nicht schaltbare erfindungsgemäße optische Elemente wie vorstehend beschrieben, als auch für im Folgenden beschriebene, schaltbare Ausgestaltungen.

Für eine Schaltbarkeit der optischen Wirkung des erfindungsgemäßen optischen Elements, also für ein schaltbares optisches Element, können die Übergangsdipolmomente in jeder Schicht in ihrer Ausrichtung und/oder ihrem Betrag zwischen dem ersten und mindestens einem zweiten Zustand variiert werden, um die jeweilige Schicht alternativ in mindestens zwei verschiedene Zustände versetzen zu können. Mögliche Ausgestaltungen eines schaltbaren optischen Elements bzw. jeder Schicht darin basieren beispielsweise auf Flüssigkristallen und/oder Farbstoffen bzw. Farbstoffmischungen, welche in einer sogenannten *"Vertical alignment cell"oder* in einer Flüssigkristallzelle mit homogener Ausrichtung an den Oberflächen angeordnet und darin zwischen mindestens zwei Zuständen gedreht werden können. Dabei werden die Licht absorbierenden Übergangsdipolmomente auch gedreht und können somit mindestens zwei Wirkungszustände annehmen. Es ist insbesondere in derartigen Ausgestaltungen denkbar, dass mehr als zwei Zustände, z.B. drei oder acht Zustände, mit jeweils unterschiedlichen optischen Wirkungen erzielt werden. Andere Ausgestaltungen der Flüssigkristallzellen sind ebenfalls denkbar. Hierzu werden insbesondere elektrische Felder verwendet, um die Flüssigkristalle zu drehen. Dabei ist es möglich, dass zum Beispiel entweder ein erstes elektrisches Feld oder ein zweites elektrisches Feld einen feldfreien Zustand beschreibt, wobei das jeweils andere elektrische Feld eine absolute Feldstärke größer null, z.B. 0,5 MV/m, aufweist.

Dabei entspricht ein erster solcher Zustand den vorstehend beschriebenen Gegebenheiten und mindestens ein zweiter Zustand ist davon verschieden, weist also mindestens eine andere Vorzugsrichtung auf.

Bei derartigen aktiven, also schaltbaren optischen Elementen sind Volumendichten der Übergangsdipolmomente zwischen 0.1 % und 90 % basierend auf Flüssigkristallen denkbar. Alternativ sind Ausgestaltungen eines schaltbaren optischen Elements bzw. jeder Schicht darin denkbar, bei denen die Übergangsdipolmomente in einer Flüssigkeit eingebettet sind, welche einem Elektro-Wetting-Verfahren ausgesetzt sind. Auf diese Weise lässt sich insbesondere, aber nicht allein, die Dichte der Übergangsdipolmomente variieren.

Es ist außerdem möglich, dass das optische Element in mehrere, separat schaltbare Segmente unterteilt ist, so dass eine lokale Umschaltbarkeit zwischen den jeweils mindestens zwei verschiedenen Zuständen ermöglicht wird. Im Rahmen der Umschaltbarkeit mit mindestens zwei Zuständen ist es somit insbesondere umsetzbar, dass die lokalen jeweiligen Transmissionsmaxima zwischen den mindestens zwei Zuständen in jeweils unterschiedlichen Richtungen liegen.

Vorzugsweise ist außerdem die jeweilige Vorzugsrichtung eines Übergangsdipolmoments in Abhängigkeit von dessen Position in der jeweiligen Schicht wählbar.

In einer weiteren bevorzugten Ausgestaltung des optischen Elements ist jede Schicht entlang einer wählbaren Referenzlinie auf der jeweiligen Schicht in verschiedene Bereiche eingeteilt, wobei für jeden Bereich eine eigene Bereichs-Vorzugsrichtung wählbar ist, welche für alle innerhalb eines Bereiches liegenden Übergangsdipolmomente der entsprechenden Schicht gilt, wobei alle Bereichs-Vorzugsrichtungen paarweise verschieden sind und bis auf eine Toleranz von maximal +/-10° in Richtung eines Betrachters weisen. Innerhalb einer Schicht und innerhalb eines jeden dafür geltenden Bereichs sind demnach alle Übergangsdipolmomente mit einer Toleranz von maximal +/-10° jeweils parallel zu der dort geltenden Vorzugsrichtung ausgerichtet. Vorteilhaft ist jede der Schichten in ihrer Struktur nicht-periodisch aufgebaut, was das Auftreten störender visueller Artefakte vermindert bzw. verhindert. Diese Anordnung hat den Vorteil, dass der Betrachter den Bildschirm im eingeschränkten Sichtmodus als homogen ausgeleuchtet wahrnimmt. Durch die Blickwinkelabhängigkeit der Leuchtdichte nimmt er den Bildschirm als inhomogen wahr, wenn die Ausrichtung der Übergangsdipolmomente über die gesamte Fläche des Filters konstant ist.

Einfache Möglichkeiten, ein optisches Element wie vorangehend beschrieben herzustellen, bestehen darin, dass das optische Element durch Laminierung einer Vielzahl von Polymerfolienpolarisatoren. Es ist dann als Laminat von Schichten von Polymerfolienpolarisatoren ausgebildet. Alternativ oder in Kombination kann das optische Element auch durch Fotoausrichtung von Molekülen oder Partikeln hergestellt werden.

Bevorzugt enthält das Material des optischen Elements mindestens einen Farbstoff, bevorzugt eine dichroitische Farbstoffmischung. Der mindestens eine Farbstoff besteht aus Farbstoffmolekülen, wobei vorteilhaft zu jedem Farbstoffmolekül ein Übergangsdipol bzw. Übergangsdipolmoment assoziiert ist, d.h. jedes Farbstoffmolekül entspricht einem Übergangsdipol bzw. Übergangsdipolmoment. Typischerweise hat ein Farbstoff bei LC-Farbstoff-Mischungen beispielsweise einen Masseanteil von 0,01 % bis 10 %, vorzugsweise von 0,1% bis 5 % am Material der jeweiligen Schichten. Die Dicke der Schichten liegt vorzugsweise im Bereich von 0,2 µm bis 50 µm, bevorzugt im Bereich von 0,5 µm bis 20 µm, alle Randwerte jeweils eingeschlossen. Die Farbstoffe bzw. Farbstoffmischungen der unterschiedlichen Schichten können unterschiedlich sein.

Außerdem ist es möglich, dass das Material des optischen Elements Flüssigkristalle enthält und/oder mit Flüssigkristallen gemischt ist. Auch dies kann bei Vorhandensein mehrerer Schichten schichtweise variieren.

Als bevorzugte Ausgestaltung gilt für jede Schicht eine Mischung aus Flüssigkristallen mit mindestens einem Farbstoff, besonders mit mindestens einer dichroitischen Farbstoffmischung. Als dichroitische Farbstoffe bzw. Farbstoffmischungen kommen z.B. Azomethinfarbstoffe, indigoide und thioindigoide Farbstoffe, Merocyanine, Azulen, Chinophtalonfarbstoffe, Perylenfarbstoffe, Phthaloperinfarbstoffe, Dioxazinfarbstoffe, Triphenodioxazinfarbstoffe, Chinoxalinfarbstoffe, Triazinfarbstoffe, Tartrazin, Azo-Farbstoffe und Anthraquinonfarbstoffe in Frage. Die Herstellung einer Flüssigkristallfarbstoffmischung ist beispielsweise beschrieben in der US 4,695,131 A. Ferner sind die die Schichten außen abschließenden Oberflächen vorzugsweise behandelt, beispielsweise gebürstet, um eine homogene Oberflächenausrichtung der Übergangsdipolmomente bzw., falls vorhanden, der Flüssigkristalle zu erreichen.

Generell kann sich vorteilhaft in Betrachtungsrichtung vor oder hinter dem optischen Element ein Polarisationsfilter befinden, insbesondere bei der Verwendung in einem schaltbaren Lichtfilter. Der Polarisationsfilter ist für die Festlegung bzw. Analyse der Polarisationseigenschaften des das optische Element durchdringenden Lichtes hilfreich und sollte bevorzugt stets vorhanden sein. Die maximale Transmission des optischen Elements ist dann in der Regel jeweils gegeben in Richtungen, die parallel zur Polarisationsrichtung des Polarisationsfilters liegen. Es ist auch möglich, dass zwei solche Polarisationsfilter vorhanden sind, die dann jeweils in Betrachtungsrichtung vor und hinter einem optischen Element angeordnet und hinsichtlich ihrer linearen Polarisationsrichtung im Wesentlichen parallel zueinander ausgerichtet sind, wodurch sich der Schutzeffekt im eingeschränkten Sichtmodus verbessern lässt.

Das optische Element, wie es vorangehend beschrieben wurde, kann in einer nicht von der Erfindung umfassten Beleuchtungseinrichtung verwendet werden. Eine solche Beleuchtungseinrichtung kann in mindestens zwei Betriebsarten betrieben werden, einer Betriebsart B1 für einen freien Sichtmodus und einer Betriebsart B2 für einen eingeschränkten Sichtmodus. Der eingeschränkte Sichtmodus unterscheidet sich vom freien Sichtmodus dahingehend, dass in Richtung eines Betrachters Licht in einem gegenüber dem freien Sichtmodus eingeschränkten Winkelbereich abgestrahlt wird. Ein außerhalb des eingeschränkten Winkelbereichs befindlicher Betrachter sieht dann kein von der Beleuchtungseinrichtung - dasselbe gilt auch für einen Bildschirm, der weiter unten beschrieben wird - ausgehendes Licht, wohingegen er im freien Sichtmodus von der Beleuchtungseinrichtung - bzw. von einem Bildschirm - ausgehendes Licht wahrnimmt, sofern er sich in dem grundsätzlich natürlich beschränkten Abstrahlwinkelbereich der Beleuchtungseinrichtung bzw. des Bildschirms im freien Sichtmodus befindet, welcher gegenüber dem Abstrahlwinkelbereich im eingeschränkten Sichtmodus deutlich größer ist. Die Einschränkung kann dabei in mehreren Raumrichtungen - z.B. nach oben, unten, rechts und/oder links - erfolgen, je nach Anwendung.

Die Beleuchtungseinrichtung umfasst eine flächenartig ausgedehnte Hintergrundbeleuchtung, welche ein optisches Element, wie es vorangehend ausführlich beschrieben wurde, enthält und Licht abstrahlt. Sie umfasst einen in Betrachtungsrichtung vor der Hintergrundbeleuchtung gelegenen, plattenförmigen Lichtleiter, welcher auf mindestens einer der Großflächen und / oder innerhalb seines Volumens Auskoppelelemente aufweist, wobei der Lichtleiter für das von der Hintergrundbeleuchtung ausgehende Licht zu mindestens 40%, bevorzugt zu mindestens 70%, transparent ist. Seitlich sind an mindestens einer Schmalseite des Lichtleiters Leuchtmittel angeordnet. In Betrachtungsrichtung ist außerdem vor der Hintergrundbeleuchtung oder vor dem Lichtleiter ein linearer Polarisationsfilter angeordnet, wodurch Licht, welches von der Hintergrundbeleuchtung ausgeht und den Polarisationsfilter durchdringt, in seinen Ausbreitungsrichtungen eingeschränkt wird. In der Betriebsart B2 ist die Hintergrundbeleuchtung ein- und sind die Leuchtmittel ausgeschaltet. In der Betriebsart B1 sind mindestens die Leuchtmittel eingeschaltet, d.h. es kommt in der Betriebsart B1 nicht darauf an, ob die Hintergrundbeleuchtung ein- oder ausgeschaltet ist.

Schließlich lässt sich das vorangehend beschriebene optische Element, wie schon angedeutet, auch in einem Bildschirm verwenden, der in den im Zusammenhang mit der Beleuchtungseinrichtung schon erwähnten mindestens zwei Betriebsarten B1 für einen freien Sichtmodus und B2 für einen eingeschränkten Sichtmodus betrieben werden kann. Ein solcher Bildschirm umfasst eine flächenartig ausgedehnte Hintergrundbeleuchtung, die ein optisches Element, wie es vorangehend beschrieben wurde, enthält und Licht abstrahlt. Der Bildschirm umfasst außerdem einen in Betrachtungsrichtung vor der Hintergrundbeleuchtung gelegenen, plattenförmigen Lichtleiter, welcher auf mindestens einer der Großflächen und / oder innerhalb seines Volumens Auskoppelelemente aufweist, wobei der Lichtleiter für das von der Hintergrundbeleuchtung ausgehende Licht zu mindestens 40 %, bevorzugt zu mindestens 70 % transparent ist. Seitlich an mindestens einer Schmalseite des Lichtleiters sind Leuchtmittel angeordnet. In Betrachtungsrichtung ist außerdem vor der Hintergrundbeleuchtung oder vor dem Lichtleiter ein linearer Polarisationsfilter angeordnet, wodurch Licht, welches von der Hintergrundbeleuchtung ausgeht und den Polarisationsfilter durchdringt, in seinen Ausbreitungsrichtungen eingeschränkt wird. Außerdem ist dem Lichtleiter in Betrachtungsrichtung eine transmissive Bildwiedergabeeinrichtung vorgeordnet. Der Polarisationsfilter kann in der Bildwiedergabeeinrichtung angeordnet und insbesondere Teil dieser Bildwiedergabeeinrichtung sein, wie es beispielsweise bei LC-Displays der Fall ist. In der Betriebsart B2 ist die Hintergrundbeleuchtung ein- und sind die Leuchtmittel ausgeschaltet. In der Betriebsart B1 sind mindestens die Leuchtmittel eingeschaltet, d.h. es kommt in der Betriebsart B1 nicht darauf an, ob die Hintergrundbeleuchtung ein- oder ausgeschaltet ist.

Allgemeiner liegt auch ein Bildschirm im Rahmen der Erfindung, welcher mindestens ein optisches Element, wie vorstehend beschrieben, oder eine Anordnung, wie vorstehend beschrieben, umfasst sowie eine dem optischen Element von einem Betrachter aus gesehen nach- oder vorgeordnete Bildwiedergabeeinheit. Vorteilhaft entspricht die Bildwiedergabeeinheit einem LCD-Panel, dessen einer Polarisationsfilter dem vorbeschriebenen Polarisationsfilter entspricht. Dabei kann es sich um den vorder-oder rückseitigen Polarisator im LCD-Aufbau handeln. Bei der Bildwiedergabeeinheit kann es sich alternativ um ein OLED, einen Feldemissionsbildschirm (SED), einen Feldemissionsbildschirm (FED), ein microLED-Display oder eine Vakuum-Fluoreszenzanzeige (VFD) handeln, vor welchem ein optisches Element angeordnet ist. Da das optische Element unabhängig von der Art der Bildwiedergabeeinheit wirksam ist, kommen jedwede andere Bildschirmtypen ebenso in Frage. Ein solcher Bildschirm findet vorteilhaft Verwendung in einem mobilen Gerät, einem Kraft-, Luft- oder Wasserfahrzeug, in einem Zahlterminal oder in einem Zugangssystem. Dabei kann - im Falle eines schaltbaren optischen Elements - zwischen den genannten Betriebsarten umgeschaltet werden, um sensitive Daten zu schützen, d.h. für nur einen Betrachter wahrnehmbar darzustellen, oder alternativ Bildinhalte gleichzeitig für mehrere Betrachter darzustellen. Ferner kann ein schaltbares oder nicht schaltbares optisches Element in den weiter vorn beschriebenen Ausgestaltungen zusammen mit einem statischen Bild oder auch einer dynamischen Bildwiedergabeeinheit wie etwa einem LCD-Panel verwendet werden, beispielsweise um Werbeinhalte nur in einem eingeschränkten Sichtbereich sichtbar zu machen.

Grundsätzlich bleibt die Leistungsfähigkeit der Erfindung erhalten, wenn die vorbeschriebenen Parameter in bestimmten Grenzen variiert werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:

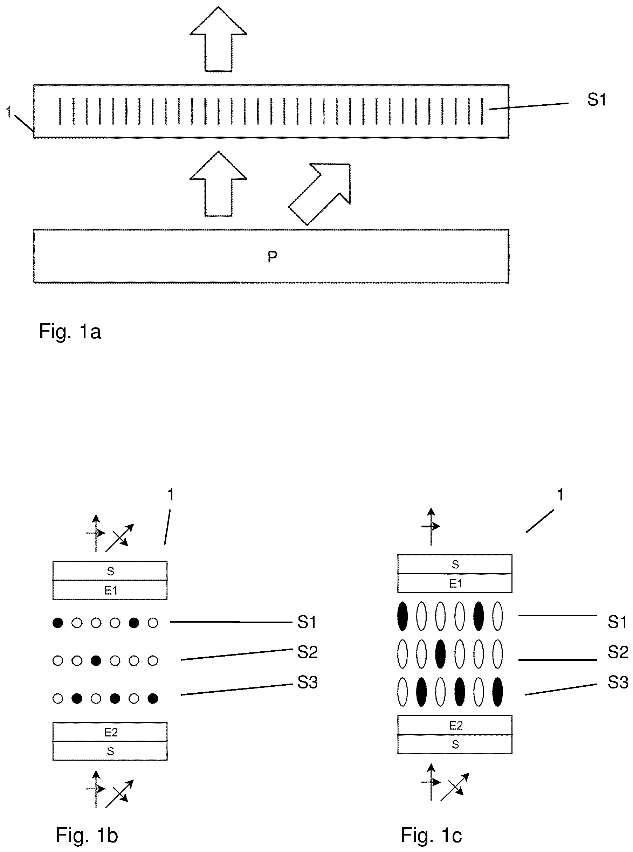

Fig. 1a die Prinzipskizze eines nicht schaltbaren optischen Elements,
Fig. 1b die Prinzipskizze eines schaltbaren optischen Elements in einem ersten Zustand,
Fig. 1c die Prinzipskizze des schaltbaren optischen Elements aus Fig. 1b in einem zweiten Zustand,

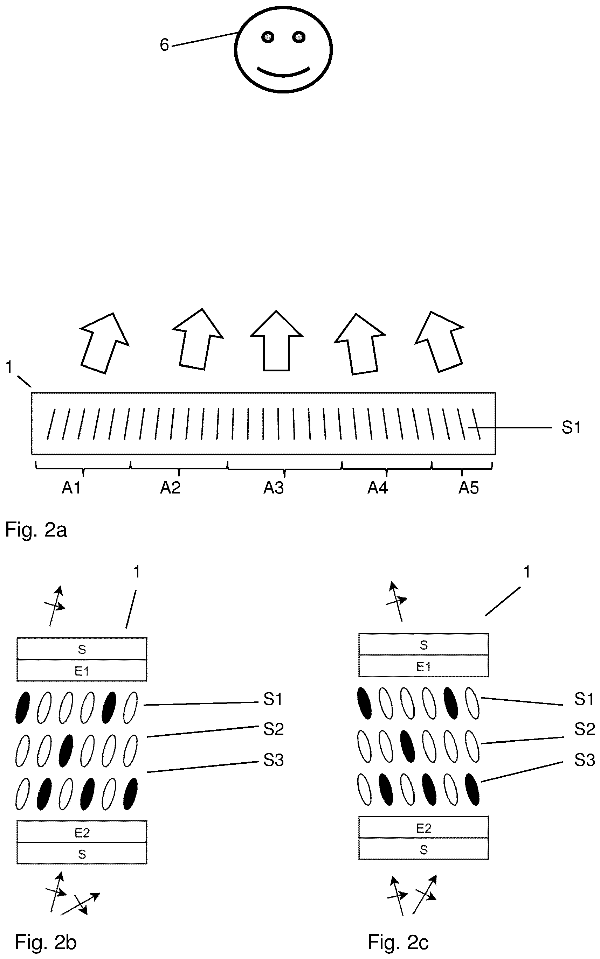

Fig. 2a die Prinzipskizze eines weiteren optischen Elements,
Fig. 2b die Prinzipskizze eines Abschnitts eines weiteren schaltbaren optischen Elements an einer ersten Position,
Fig. 2c die Prinzipskizze eines Abschnitts des weiteren schaltbaren optischen Elements an einer zweiten Position,

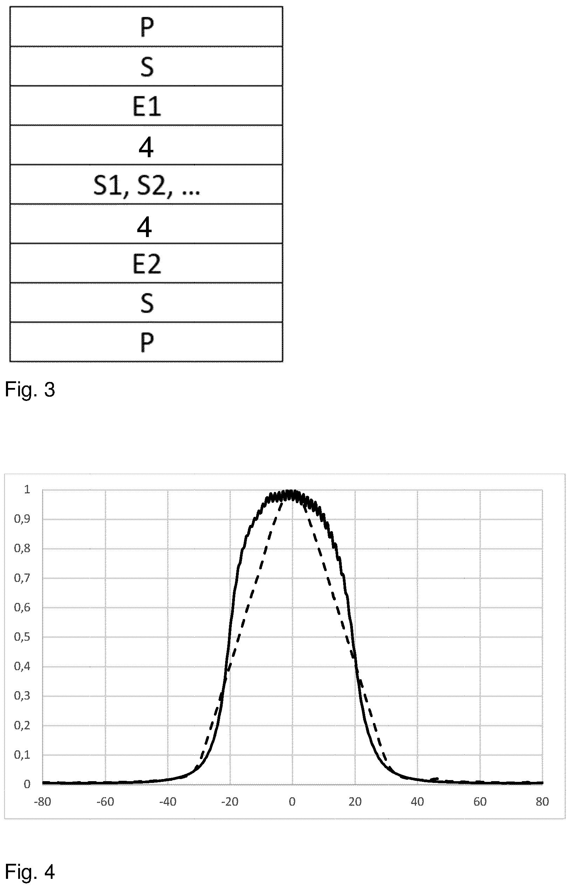

Fig. 3 die Prinzipskizze eines Aufbaus mit einem schaltbaren optischen Element gemäß Fig. 1b und 1c sowie Fig. 2b und 2c,
Fig. 4 eine beispielhafte Darstellung zum Vergleich des über verschiedene Winkel gemessenen Transmissionsverhaltens eines optischen Elements gemäß Fig. 2a-2c mit dem eines Lamellenfilters im Stand der Technik,

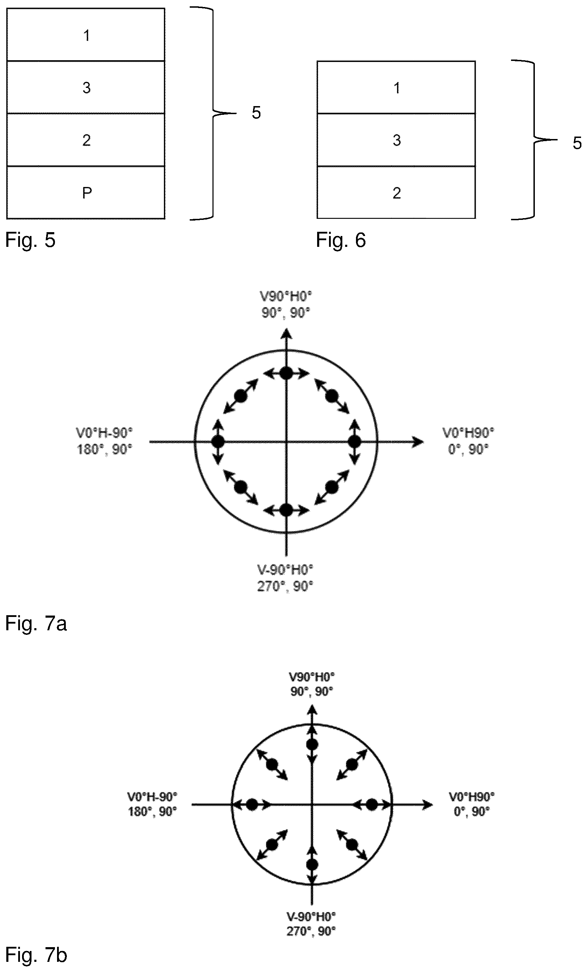

Fig. 5 die Prinzipskizze eines schaltbaren Lichtfilters in einer dritten Ausgestaltung mit einem Polarisationsfilter,
Fig. 6 die Prinzipskizze eines schaltbaren Lichtfilters in einer dritten Ausgestaltung ohne Polarisationsfilter,
Fig. 7a-7c Skizzen zur Beeinflussung des Lichtes aufgrund eines schaltbaren Lichtfilters gemäß der Fig.6,

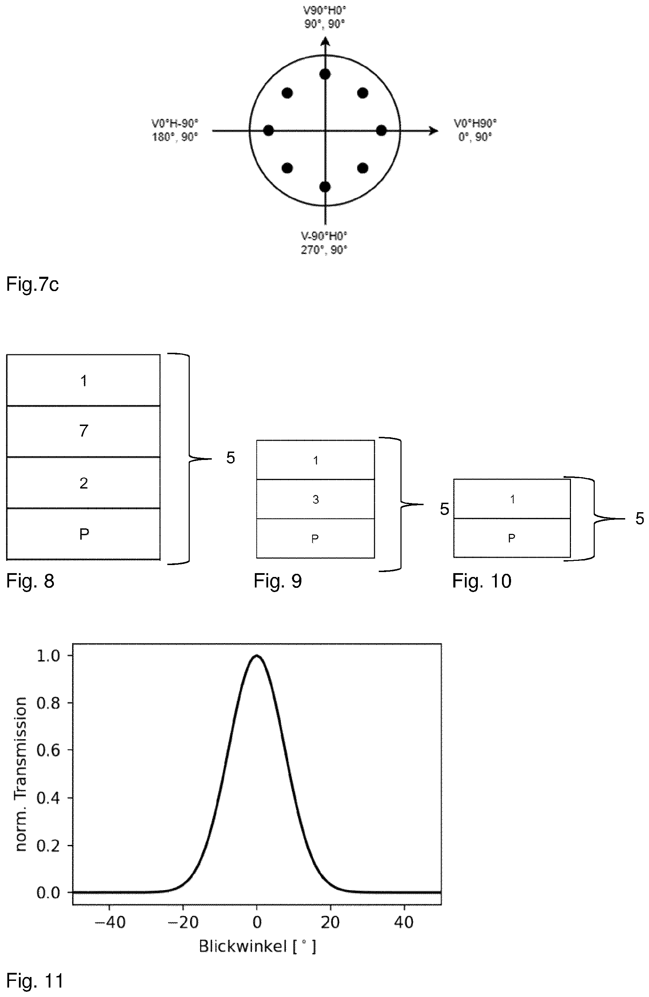

Fig. 8 die Prinzipskizze eines schaltbaren Lichtfilters in einer vierten Ausgestaltung,
Fig. 9 die Prinzipskizze eines schaltbaren Lichtfilters in einer ersten Ausgestaltung,
Fig. 10 die Prinzipskizze eines schaltbaren Lichtfilters in einer zweiten Ausgestaltung, sowie
Fig. 11-15 optische Simulationen zur Veranschaulichung der optischen Wirkung eines optischen Elements.

### Ausführliche Beschreibung der Zeichnungen

Die Zeichnungen sind nicht maßstabsgetreu und geben lediglich Prinzipdarstellungen wieder.

Fig. 1a zeigt die Prinzipskizze eines beispielhaften nicht schaltbaren optischen Elements 1. Selbiges umfasst mindestens eine Schicht S1, wobei diese Schicht S1 Material mit einer Vielzahl Licht absorbierender elektrischer Übergangsdipolmomente (die hier vereinfacht als kleine vertikale Striche dargestellt sind) umfasst, welche mindestens in einem ersten Zustand parallel zu einer wählbaren Vorzugsrichtung ausgerichtet sind (hier senkrecht zur Oberfläche der Schicht S1) oder um diese herum fluktuieren, wodurch die besagte Vorzugsrichtung einen Winkel zwischen 0° und 45° zur Flächennormale der Schicht S1 einschließt, so dass Licht, welches in das optische Element einfällt, in Abhängigkeit von seiner Einfallsrichtung gegenüber der Schicht S1 und seinen Polarisationseigenschaften transmittiert oder teilweise oder ganz absorbiert wird.

Das optische Element 1 kann beispielsweise durch Laminierung einer Vielzahl von Polymerfolienpolarisatoren und/oder durch Fotoausrichtung von Molekülen oder Partikeln hergestellt werden. Je nach Implementierung kann die Dichte der besagten elektrischen Übergangsdipole in der Schicht S1 variieren. Bei einem passiven Polarisator kann die Volumendichte gegen 100% gehen.

Das Material des optischen Elements 1, welches die Übergangsdipolmomente enthält, kann auch mindestens eine Art eines Farbstoffes, insbesondere eine Art eines Farbstoffmoleküls, bevorzugt mindestens eine Art eines dichroitischen Farbstoffs oder einer dichroitischen Farbstoffmischung enthalten. Dabei kann vorteilhaft ein Farbstoffmolekül einem Übergangsdipolmoment entsprechen. Typischerweise hat ein Farbstoff einen Masseanteil von 0,01 % bis 30 %, vorzugsweise von 0,1% bis 15 % oder 5%, oder von 0,01 % bis 10 %, am Material der jeweiligen Schichten S1, S2, .... Die Dicke der Schichten liegt vorzugsweise im Bereich von 0,2 µm bis 50 µm, bevorzugt im Bereich von 0,5 µm bis 20 µm. Die Farbstoffe bzw. Farbstoffmischungen der unterschiedlichen Schichten können unterschiedlich sein.

Die Schichten S1, S2, ..., welche die Übergangsdipolmomente enthalten, können auch Flüssigkristalle oder Polymere enthalten und/oder mit Flüssigkristallen gemischt sein, bevorzugt enthalten die Schichten S1, S2, ... eine Mischung aus Flüssigkristallen oder Polymeren mit mindestens einem Farbstoff, besonders mit mindestens einer dichroitischen Farbstoffmischung.

Das optische Element 1 stellt für linear polarisiertes Licht einen Sichtschutzfilter dar. Daher ist hier ein Polarisationsfilter P vorgesehen, der von unten einfallendes Licht parallel linear zur Zeichnungsoberfläche polarisiert. Der Polarisationsfilter P ändert jedoch nicht die Lichtausbreitungsrichtungen. Zwei mögliche Lichtausbreitungsrichtungen sind mittels der beiden dicken Pfeile eingezeichnet. Aufgrund der Wirkung der Übergangsdipolmomente wird nun das Licht durch das optische Element 1 absorbiert, welches beispielweise eine (schräge) Richtung von etwa über 30° gegenüber der Vorzugsrichtung, hier der Mittelsenkrechten auf die Schicht S1, aufweist. Schließlich bleibt im Wesentlichen nur noch das entlang der Vorzugsrichtung bzw. hier senkrecht auf das optische Element 1 einfallende Licht nach Durchgang durch selbiges übrig, wie mit dem einzelnen Pfeil oben in der Zeichnung dargestellt. Je nach Anwendungsfall ist jede der Schichten S1, S2, ... in ihrer Struktur periodisch oder nicht-periodisch aufgebaut.

Die Extinktion (also die Absorption) des Lichtes ist von der absoluten Zahl der Übergangsdipolmomente und somit inhärent auch von den Schichtdicken des Materials mit den Übergangsdipolmomenten abhängig. Je nach Implementierung kann die Dichte der besagten Übergangsdipolmomente, deren Stärke oder die Brechzahl in den Schichten S1, S2, ... variieren. Bei einem passiven, also nicht schaltbaren optischen Element 1 kann die Volumendichte der Übergangsdipole gegen 100% gehen.

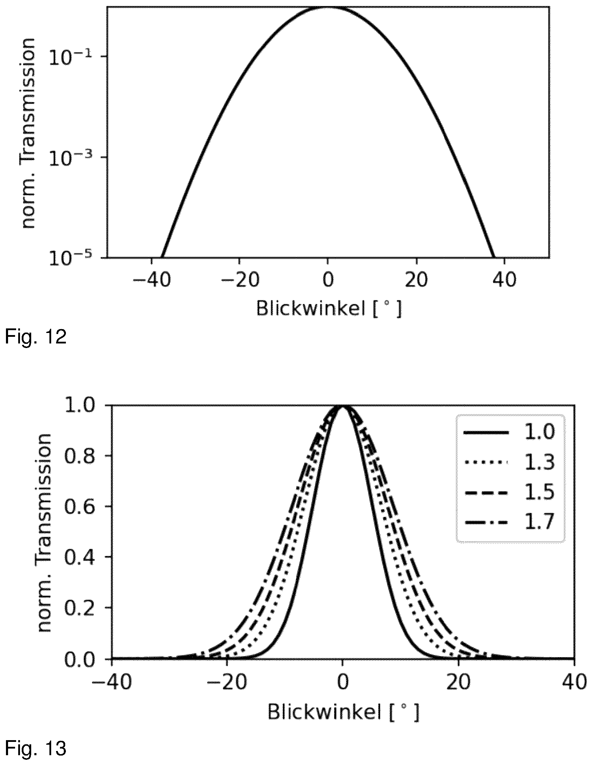

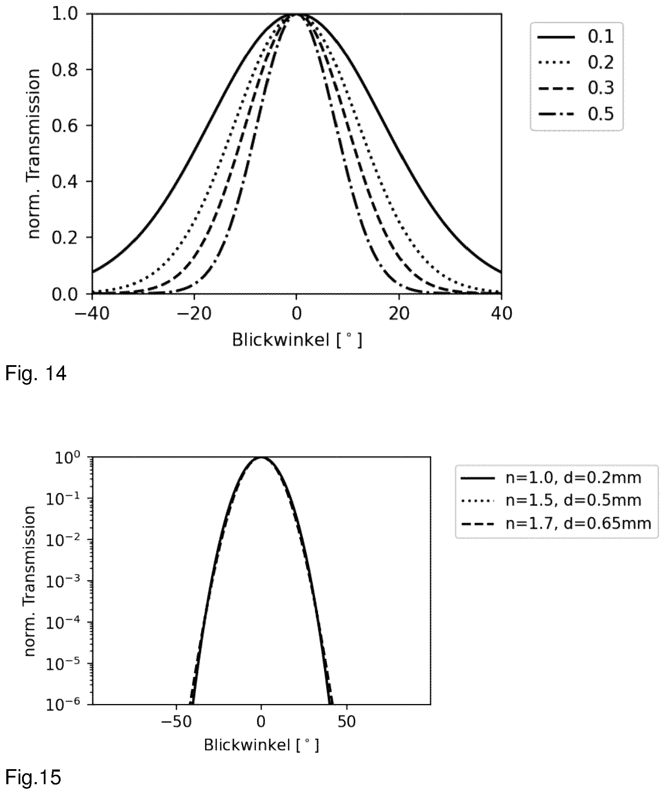

Dazu zeigen die Zeichnungen Fig. 11 bis Fig. 15 optische Simulationen zur Veranschaulichung der optischen Wirkung eines optischen Elements 1. Die Fig. 11 zeigt ein Diagramm zur normierten Transmission des Lichts beim Durchgang durch ein optisches Element 1 gemäß Fig. 1, hier über horizontale Messwinkel von -90° bis +90° aufgetragen. Die starke Absorptionswirkung bei Winkeln über +/-25° ist deutlich sichtbar. Die Simulationen basieren auf einer angenommenen Schichtdicke eines optischen Elements 1 von d = 0,5 mm, einer Brechzahl des Materials von n = 1,5, der Molarität M = 0,01 mol m⁻³ sowie einer beispielhaften molaren Extinktion von ε = 12700 m² mol⁻¹. Die Dicken und Konzentration lassen sich im Verhältnis zueinander variieren, so erhält man beispielsweise bei einer zehnfach kleineren Dicke und einer zehnfach höheren Konzentration die gleiche Transmission. In Fig. 12 sind die Verhältnisse nach Fig. 11 auf der Ordinate logarithmisch für den für die Nutzung wesentlichen Wertebereich aufgetragen. Es ist zu erkennen, dass bei derartigen Parametern bei +/-25° die Transmission schon auf etwa ein Prozent und bei +/-40° schon auf nur rund 0,001 % verringert wird. In Fig. 13 wurden die für Fig. 11 angenommen Voraussetzungen hinsichtlich der Brechzahl n für Werte n=1,0; 1,3; 1,5 sowie n=1,7 berechnet. Es ist zu erkennen, dass die Transmission im Winkel umso eingeschränkter wird, je geringer die Brechzahl des Materials der Schicht S1 ist. Weiterhin zeigt die Fig. 14 eine Variation der normierten Transmission durch ein optisches Element 1 gemäß der Verhältnisse nach Fig. 11 hinsichtlich der Dicke eines optischen Elements 1. Dabei wurden Schichtdicken von d = 0,1 mm; 0,2 mm; 0,3 mm; 0,4 mm sowie 0,5 mm berechnet. Wie zu erwarten sorgt demzufolge eine größere Schichtdicke für eine stärkere Einschränkung der Transmission über die Winkel. Schließlich zeigt Fig.15 die winkelabhängige, normierte Transmission für drei ausgewählte Parametersätze (1. n = 1,0 und d = 0,2 mm; 2. n = 1,5 und d = 0,5 mm; 3. n = 1,7 und d = 0,65 mm). Alle drei Parametersätze erzeugen sehr ähnliche optische Wirkungen.

Die demgegenüber im Stand der Technik bekannten Mikrolamellenfilter (auch "View Control Filter - VCF" oder "Light Control Filter - LCF" genannt) machen sich die geometrische Optik zu nutze. Durch die abwechselnde periodische Anordnung von transparenten und absorbieren Schichten wird (nahezu) alles Licht absorbiert, dass sich unter großen Winkeln relativ zu einer definierten Richtung ausbreitet. Es wird dort die *Position* der Absorber kontrolliert. Demgegenüber ändert sich bei den optischen Element 1 die Transmission von Licht mit unterschiedlichen Ausbreitungsrichtungen, da sich hierbei der Absorptionsquerschnitt der Moleküle mit der Ausbreitungsrichtung ändert. Es wird somit hier nicht die Position, sondern vielmehr insbesondere die Orientierung der Absorber kontrolliert. Mit anderen Worten: Die Wirkung des optischen Elements 1 basiert auf einer richtungsabhängigen Absorption der Lichtstrahlen bei der Passage durch es, und zwar grundsätzlich unabhängig von der Position der Lichtstrahlen. Dies gilt sowohl für nicht schaltbare optische Elemente wie vorstehend beschrieben, als auch für im Folgenden beschriebene, schaltbare Ausgestaltungen.

Für eine Schaltbarkeit der optischen Wirkung des optischen Elements 1, also für ein schaltbares optisches Element 1, können die Licht absorbierenden elektrischen Übergangsdipolmomente in jeder Schicht S1, S2, ... in ihrer Ausrichtung und/oder ihrem Absolutwert variiert werden, um die jeweilige Schicht S1, S2, ... in mindestens zwei verschiedene Zustände versetzen zu können. Mögliche Ausgestaltungen eines schaltbaren optischen Elements 1 bzw. jeder Schicht S1, S2, ... darin basieren beispielsweise auf Flüssigkristallen oder Fluorophoren, welche in einer sogenannten *"Vertical alignment cell" oder* in einer Flüssigkristallzelle mit homogener Ausrichtung an den Oberflächen angeordnet und darin zwischen mindestens zwei Zuständen gedreht werden können. Dabei werden die Licht absorbierenden elektrischen Übergangsdipolmomente auch gedreht und können somit mindestens zwei Wirkungszustände annehmen. Es ist insbesondere in derartigen Ausgestaltungen denkbar, dass mehr als zwei Zustände, z.B. drei oder acht Zustände, mit jeweils unterschiedlichen optischen Wirkungen erzielt werden. Andere Ausgestaltungen der Flüssigkristallzellen sind ebenfalls denkbar.

Dazu zeigt Fig. 1b die Prinzipskizze eines schaltbaren optischen Elements in einem ersten Zustand und Fig. 1c die Prinzipskizze eines schaltbaren optischen Elements in einem zweiten Zustand.

Für diesen beispielhaften Fall soll angenommen werden, dass das einfallende Licht p-polarisiert, also parallel zur Einfallsebene polarisiert (siehe Fig. 1b) ist. Sind die transparenten Elektroden E1, E2 ungeladen, d.h. sie erzeugen das elektrische Feld EF1 mit 0 V/m (feldfrei), dann sind die hier als Punkte gezeigten Flüssigkristallmoleküle und Farbstoffmoleküle (welche hier beispielsweise als Schichten S1, S2 und S3 ausgebildet sind) entlang der Oberfläche der Elektroden E1, E2 ausgerichtet. Dies kann durch geeignete Kombination von Oberflächenfunktionalisierung und Flüssigkristallen erreicht werden und ist im Stand der Technik bekannt. Für Licht, welches sich in der Zeichenebene ausbreitet und s-polarisiert ist, sind die Polarisation des Lichts und Übergangsdipolmomente der Flüssigkristalle immer senkrecht zueinander orientiert. Daher findet keine Absorption statt, so dass die oberhalb und unterhalb der Substrate S gezeigte Lichtausbreitungsrichtungen mit s-Polarisation das schaltbare optische Element 1 ungehindert durchdringen.

Werden, wie in Fig. 1c gezeigt, die Elektroden E1 und E2 geladen, d.h. sie erzeugen das elektrische Feld EF2 > 0 V/m, so drehen sich die ich Flüssigkristalle in den Schichten S1, S2 und S3. Übersteigt die Spannung und damit die Feldstärke EF2 einen gewissen Schwellwert, so sind Flüssigkristallmoleküle und damit - wenn vorhanden - auch Farbstoffmoleküle nahezu parallel zu den Feldlinien des elektrischen Feldes EF2 ausgerichtet. Dadurch wird Licht in Abhängigkeit des Winkels α, der Winkel zwischen Ausbreitungsrichtung des Lichts und Flächennormale der Oberfläche der Schicht S1, absorbiert. Die Absorption steigt mit dem Winkel α an. Die Extinktion des elektrischen Feldes des Lichts ist proportional zu sin(α). Grundsätzlich ist eine Kontrolle der Ausrichtung der Farbstoffmoleküle von Vorteil, um dadurch die Achse des Sichtschutzes zu kontrollieren bzw. um eine definierte Lichtbeeinflussung durchzuführen. Im Zustand gemäß Fig. 1b sind die Übergangsdipolmomente senkrecht zu der Polarisation des einfallenden Lichts ausgerichtet und im Zustand gemäß Fig. 1c parallel zum senkrechten Lichteinfall. Bei derartigen schaltbaren optischen Elementen sind Volumendichten des Farbstoffs zwischen 0.1 % und 20 %, ggf. auch mehr bis zu 90 %, basierend auf Flüssigkristallen denkbar.

Fig. 2a zeigt die Prinzipskizze eines weiteren nicht schaltbaren optischen Elements 1. Selbiges umfasst (hier beispielhaft nur) eine Schicht S1, wobei diese Schicht S1 Material mit einer Vielzahl an Licht absorbierenden Übergangsdipolmomenten (durch die kleinen Striche der Schicht S1 angedeutet in Fig. 2a) umfasst. Jedes Übergangsdipolmoment ist mindestens in einem ersten Zustand mit einer Toleranz von maximal 10° parallel zu einer jeweiligen Vorzugsrichtung (hier durch die dicken Pfeile angedeutet), welche jeweils in Abhängigkeit von der Position eines solchen Übergangsdipols innerhalb der Schicht S1 für diesen wählbar ist, ausgerichtet oder fluktuiert um diese herum, wobei sich mindestens zwei solche Vorzugsrichtungen in einer wählbaren Ebene (hier der Zeichenebene) um mehr als 10° unterscheiden. Dadurch wird erreicht, dass so dass Licht, welches in das optische Element 1 einfällt, in Abhängigkeit von seiner Einfallsrichtung gegenüber der Schicht S1 und seinen Polarisationseigenschaften transmittiert oder teilweise oder ganz absorbiert wird, wobei der höchste Transmissionsgrad für jeden Übergangsdipol in der für seine Position innerhalb der Schicht S1 jeweils gewählten Vorzugsrichtung vorliegt, wobei eine Toleranz von maximal 10° erlaubt ist.

Im Unterschied zu Fig. 1 ist das in Fig. 2 gezeigte optische Element 1 derart ausgestaltet, dass die Schicht S1 entlang einer wählbaren Referenzlinie (hier ihrer Unterkante) in verschiedene Bereiche A1, A2, A3, A4, A5 eingeteilt ist, wobei für jeden Bereich A1, A2, ... eine eigene Bereichs-Vorzugsrichtung (siehe dicke Pfeile) gewählt ist, welche für alle innerhalb eines Bereiches A1, A2, ... liegenden Übergangsdipolmomente der Schicht S1 gilt. Dabei sind alle Bereichs-Vorzugsrichtungen paarweise verschieden voneinander und - bis auf eine Toleranz von maximal +/-10° - weisen sie alle in Richtung eines Betrachters 6. Innerhalb der Schicht S1 und innerhalb eines jeden dafür geltenden Bereichs A1, A2, ... sind demnach alle Übergangsdipolmomente mit einer Toleranz von maximal +/-10° jeweils parallel zu der dort geltenden Bereichs-Vorzugsrichtung ausgerichtet. Aufgrund der definierbaren Transmissionsgrade auf dem optischen Element 1 kann dieses besonders vorteilhaft zur Erzeugung von Sichtschutzlösungen eingesetzt werden.

Für eine Schaltbarkeit der optischen Wirkung des optischen Elements 1, also für ein schaltbares optisches Element 1, können die Licht absorbierenden Übergangsdipolmomente in jeder Schicht S1, S2, ... in ihrer Ausrichtung (Orientierung) und/oder ihrem Absolutwert und/oder ihrer Dichte variiert werden, um die jeweilige Schicht S1, S2, ... in mindestens zwei verschiedene Zustände versetzen zu können.

Dazu zeigt Fig. 2b die Prinzipskizze eines ersten Abschnitts eines schaltbaren optischen Elements in einem ersten Zustand - dieser entspricht A1 in Fig. 2a - und Fig. 2c die Prinzipskizze eines zweiten Abschnitts eines schaltbaren optischen Elements in einem ersten Zustand - dieser entspricht A5 in Fig. 2a. Hier sind beispielhaft drei Schichten S1, S2, S3 vorhanden. Die mit der dichroitischen Farbstoffmischung gemischten Flüssigkristalle sind hier durch die ellipsenförmigen Elemente in den Schichten S1, S2, S3 angedeutet, wobei die schwarzen ellipsenförmigen Elemente die Farbstoffmoleküle und die weißen ellipsenförmigen Elemente die Flüssigkristalle stark vereinfacht andeuten sollen. Die Neigung der Ellipse soll ferner die räumliche Ausrichtung andeuten. Bei den Substraten S kann es sich um Glas oder ein Polymer oder ein anderes transparentes Material handeln.

Die jeweiligen transparenten Elektroden E1, E2, z.B. Schichten aus Indiumzinnoxid (ITO-Schichten), dienen zur Steuerung der Ausrichtung der mit den Farbstoffmischungen gemischten Flüssigkristalle. Die unterschiedliche Ausrichtung der Flüssigkristallmoleküle und damit der Farbstoffe wird jedoch bevorzugt durch unterschiedliche Oberflächenfunktionalisierungen erreicht. Hier kommen mechanische und optische Verfahren in Frage. Die in Fig. 2b gezeigte Ausrichtung der Flüssigkristalle samt Farbstoffmischung entspricht in etwa der Ausrichtung gemäß der Vorzugsrichtung des Abschnittes A1 in Fig. 2a. Die in Fig. 2c gezeigte Ausrichtung der Flüssigkristalle samt Farbstoffmischung entspricht in etwa der Ausrichtung gemäß der Vorzugsrichtung des Abschnittes A5 in Fig. 2a. Licht, welches von unten auf das optische Element 1 einfällt, wird im Falle der Gegebenheiten nach Fig. 2b in Richtung der entsprechenden Vorzugsrichtung der Übergangsdipole maximal transmittiert; andere Richtungen werden teilweise oder ganz absorbiert. Dies gilt in analoger Weise auch für die Gegebenheiten nach Fig. 2c.

Hinsichtlich des Verhaltens von p-polarisiertem und s-polarisiertem Licht beim Eintreffen auf das optische Element im Zusammenhang mit angelegten elektrischen Felder EF1 und EF2 wird auf die Ausführungen zu Fig. 1b und Fig. 1c verwiesen, die hier analog anwendbar sind, wobei die Übergangsdipolmomente jedoch anders ausgerichtet sind, und wobei allerdings statt der s-Polarisation die o-Polarisation und statt der p-Polarisation die e-Polarisation im Medium wesentlich sind.

Fig. 3 zeigt die Prinzipskizze eines Aufbaus mit einem schaltbaren optischen Element 1 gemäß den Ausführungen von Fig. 1b und 1c sowie 2b und 2c. Dabei sind zwei lineare Polarisationsfilter P, von denen einer optional ist, an den äußeren Flächen vorhanden, wobei deren Polarisationsrichtungen im Wesentlichen (also bis auf wenige Grad Toleranz) parallel zueinander ausgerichtet sind. Jeweils innen - also auf den einander zugewandten Seiten der Polarisationsfilter P - davon folgt dann jeweils ein transparentes Substrat S, davon wiederum nach innen folgen Elektroden E1 und E2. Die davon nach innen gewandten Ausrichtungsschichten 4 dienen der Ausrichtung von Flüssigkristallen, welche gemischt mit mindestens einem dichroitischen Farbstoff die innenliegenden Schichten S1, S2, ... bilden. Die Übergangsdipolmomente werden hier von dem mindestens einen dichroitischen Farbstoff gebildet. Grundsätzlich können im Aufbau des optischen Elements 1 in allen beschriebenen Varianten auch zusätzliche Retardierungsfilme zum Einsatz kommen, um die Polarisationszustände weiter anpassen zu können.

Die elektrische Rechteckspannung, welche zwischen den Elektroden E1 und E2 angelegt wird, weist bevorzugt Effektivwerte zwischen 0 V und 20 V auf. Bei den Ausrichtungsschichten 4 handelt es sich beispielsweise um behandelte Oberflächen (z.B. gebürstete Gläser oder Polymere), um eine gleichmäßig Oberflächenausrichtung der Übergangsdipolmomente bzw. der Flüssigkristalle zu erreichen. Damit können dann beispielsweise die in den Fig. 2b und Fig. 2c gezeigten Zustände erzeugt werden.

Schließlich zeigt Fig. 4 eine beispielhafte Darstellung zum Vergleich des über verschiedene Winkel gemessenen normierten Transmissionsverhaltens eines optischen Elements 1 (durchgezogene Linie) gemäß Fig. 2 und Fig. 3 mit dem eines Lamellenfilters aus dem Stand der Technik (gestrichelte Linie). Die Abszisse trägt dabei den jeweiligen Messwinkel und die Ordinate die normierte Transmission auf. Zu sehen ist an der durchgehenden Kurve eine annähernde sogenannte "Top-Hat"-Verteilung für das Transmissionsverhalten eines beispielhaften optischen Elements 1, d.h. die Transmission bleibt über einen breiten Winkelbereich von ca. -17° bis +17° bei mindestens 80 % stabil. Die Halbwertsbreite beträgt hier in Summe fast 40°. Damit ist eine gute vom Betrachter 6 wahrgenommene Homogenität der Transmission für Blickwinkeländerungen von ±15° gegeben, wodurch wiederum auch eine gute wahrgenommene Homogenität bei der Beleuchtung bzw. Bildwiedergabe im Zusammenspiel mit einer Bildwiedergabeeinheit erzielt wird. Der zum Vergleich herangezogene, beispielhafte Lamellenfilter aus dem Stand der Technik, dessen normiertes Transmissionsverhalten in Fig. 4 gestrichelt dargestellt ist, hat demgegenüber eine verringerte Halbwertsbreite von lediglich ca. 35°, weist ferner keine "Top-Hat"-ähnliche Verteilung auf und bietet im Winkelbereich von -30° bis -25° sowie +25° bis +30° auch einen schlechteren Sichtschutz, da die Transmission ist dort größer ist als bei dem optischen Element 1.

Das optische Element kann insbesondere in einem schaltbaren Lichtfilter 5 verwendet werden. Fig. 5 zeigt eine dritte - die Bezeichnung "dritte" vor "erster" und "zweiter" wurde gewählt, um konsistent mit der allgemeinen Beschreibung der Erfindung zu bleiben - Ausgestaltung eines solchen schaltbaren Lichtfilters 5. Dieser umfasst ein erstes optisches Element 1 und ein zweites optisches Element 2. Beide optischen Elemente 1, 2 sind selbst nicht schaltbar, d.h. statisch. Die Vorzugsrichtungen der Übergangsdipolmomente der beiden optischen Elemente unterscheiden sich um weniger als 40°, bevorzugt weniger als 20°, besonders bevorzugt weniger als 10° voneinander, wobei eine erste Vorzugsrichtung für das erste optische Element 1 und eine zweite Vorzugsrichtung für das zweite optische Element 2 wählbar sind. Im vorliegenden Fall sind die beiden Vorzugsrichtungen beispielhaft parallel zueinander und korrespondieren zur Mittelsenkrechten des schaltbaren Lichtfilters 5, die in der Zeichenebene liegt. Zwischen den optischen Elementen 1, 2 ist eine schaltbare Flüssigkristallschicht 3 angeordnet, die in Abhängigkeit von einem auf sie wirkenden elektrischen Feld EF1 oder EF2 die Polarisationseigenschaften des durch sie hindurchdringenden Lichtes beeinflusst oder nicht. In der Zeichnung und von einem Betrachter 6 aus gesehen unterhalb der optischen Elemente 1, 2 ist ein Polarisationsfilter P angeordnet; dieser könnte ebenso auch oberhalb der optischen Elemente 1, 2 angeordnet sein. Zeichnerisch nicht dargestellt sind Mittel zum wahlweisen Erzeugen des ersten elektrischen Feldes EF1 und des zweiten elektrischen Feldes EF2, beispielsweise oberhalb und unterhalb der Flüssigkristallschicht 3 angeordnete Elektroden.

In einer ersten Betriebsart B1, in welcher das erste elektrische Feld EF1 anliegt, mit einer ersten Unterbetriebsart UBH und einer zweiten Unterbetriebsart UBV, wird einerseits unpolarisiertes Licht, welches parallel zur ersten Vorzugsrichtung oder zur zweiten Vorzugsrichtung in den schaltbaren Lichtfilter 5 einfällt, zu mindestens 24% transmittiert und andererseits unpolarisiertes Licht, welches in einem Winkel von über 30° zu der entsprechenden Vorzugsrichtung in den schaltbaren Lichtfilter 5 einfällt, zu mindestens 85% absorbiert, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt, wobei entweder die erste oder die zweite Richtung senkrecht zu einer Polarisationsrichtung des Polarisationsfilters P steht. Bei Verwendung in einem Bildschirm kann die erste Richtung zur horizontalen Richtung und die zweite Richtung zur vertikalen Richtung korrespondieren, wobei mit "horizontal" eine Linie gemeint ist, die parallel zu der Abstandslinie zwischen den Augen eines Betrachters liegt. Die Horizontale liegt dann beispielsweise parallel zur Unterkante und die Vertikale parallel zur linken oder rechten Seitenkante der Schicht S1 bzw. des Bildschirms.

In einer zweiten Betriebsart B2, in welcher das zweite elektrische Feld EF2 anliegt, wird einerseits unpolarisiertes Licht, welches parallel zur ersten Vorzugsrichtung oder zur zweiten Vorzugsrichtung in den schaltbaren Lichtfilter 5 einfällt, zu mindestens 24% transmittiert und andererseits unpolarisiertes Licht, welches in einem Winkel von mehr als 30° zu der entsprechenden Vorzugsrichtung in den schaltbaren Lichtfilter 5 einfällt, zu mindestens 85% absorbiert.

Eine Abwandlung der dritten Ausführung des schaltbaren Lichtfilters 5 ohne Polarisationsfilter P ist in Fig. 6 gezeigt. Während das Verhalten dieser Abwandlung in der Betriebsart B2 identisch zu dem in Bezug auf Fig. 5 beschrieben schaltbaren Lichtfilter 5 ist, wird hier in der ersten Betriebsart B1, in welcher das erste elektrische Feld EF1 anliegt, unpolarisiertes Licht, welches in einem beliebigen Winkel in den schaltbaren Lichtfilter (5) einfällt, zu mindestens 24% transmittiert.

Somit erlaubt der schaltbare Lichtfilter 5 der dritten Ausgestaltung im Zusammenspiel mit einer Bildwiedergabeeinheit die Umschaltung entweder zwischen einem zweiseitigen und einem vierseitigen Sichtschutz (z.B. Oben/unten UBV vs. Oben/unten/links/rechts geschützt B2), wenn ein Polarisationsfilter P vorhanden ist, oder, wenn kein Polarisationsfilter P vorhanden ist, die Umschaltung entweder zwischen einer in alle Richtungen freien Betrachtung und einem vierseitigen Sichtschutz (z.B. freie Sicht B1 vs. Oben/unten/links/rechts geschützt B2).

Dabei ist es möglich, dass zum Beispiel entweder das elektrische Feld EF1 oder das elektrische Feld EF2 einen feldfreien Zustand beschrieben, wobei das jeweils andere elektrische Feld EF2 bzw. EF1 eine absolute Feldstärke größer null, z.B. 0,5 MV/m, aufweisen. Dabei kann der feldfreie Zustand je nach Ausgestaltung der optischen Elemente 1 und 2 bedeuten, dass die Betriebsart B2 vorliegt. Es ist aber auch möglich, dass im feldfreien Zustand die Betriebsart B1, bei Vorhandensein eines Polarisationsfilters P mit einer der Unterbetriebsarten UBH, UBV, vorliegt.

Die Fig. 7a bis Fig. 7c zeigen eine Skizze zum Polarisationszustand des Lichtes aufgrund eines schaltbaren Lichtfilters gemäß der Fig. 6. Die Fig. 7a zeigt den Polarisationszustand des öffentlichen Modus, korrespondierend zum Betriebsmodus B1 mit nicht eingeschränktem Blickwinkelbereich, in dem das Licht für Blickwinkel größer 30° tangential polarisiert und Licht mit senkrechtem Einfall linear polarisiert ist. Die Vorzugsrichtungen entsprechen der jeweiligen Mittelsenkrechten. Die Fig. 7c zeigt den Polarisationszustand im eingeschränkten Sichtmodus. Hier ist Licht für einen Einfallswinkel von zum Beispiel größer als 30° sehr stark abgeschwächt, während Licht mit senkrechtem Einfall der Polarisationszustand unverändert transmittiert wird.

Durch die Ausrichtung bzw. Orientierung der Übergangsdipolmomente wird das Licht für Einfallswinkel polar polarisiert, d.h. die lineare Polarisation des Lichtes ist immer senkrecht zur Richtung des Ursprungs im Blickwinkelraum ausgerichtet, im beschriebenen Fall ist der Ursprung die Mittelsenkrechte. Dieser Zustand ist in Fig. 7a gezeigt und gilt nach Durchgang des Lichts durch das nicht schaltbare optische Element 1. Das Licht mit kleinen Winkeln wird nur schwach polarisiert. Idealerweise wird Licht, das senkrecht einfällt, nicht absorbiert, d.h. der Polarisationszustand bleibt unverändert.

Tritt nun das Licht aus dem optischen Element 2 in die Flüssigkristallschicht 3 über, so kommt es auf den Zustand der Flüssigkristallschicht 3 an, ob und wie der Polarisationszustand des Lichts geändert wird, oder dieser unverändert bleibt. Ist, beispielsweise bei einem feldfreien Zustand EF1 die Polarisationsdrehung in der Flüssigkristallschicht 3 ausgeschaltet, so ändert sich am vorstehend beschrieben Zustand nichts. Nach dem Durchgang durch die Flüssigkristallschicht 3 und weiterhin durch das nicht schaltbare optische Element 1 bleibt die Transmission im Wesentlichen unverändert. Ist ein Polarisationsfilter P oberhalb des optischen Elements 1 oder unterhalb des optischen Elements 2 vorhanden, so wird eine der Unterbetriebsarten UBH oder UBV, je nach Ausgestaltung, erreicht. Existiert dieser Polarisator nicht, wird die Betriebsart B1 realisiert.

Wird nun beispielsweise demgegenüber durch Anlegen eines elektrischen Feldes EF2 > 0 V/m die Polarisationsdrehung in der Flüssigkristallschicht 3 eingeschaltet, so wird die Polarisation überall um 90° gedreht. Der Polarisationszustand ist in Fig. 7b gezeigt: dort ist der Polarisationszustand nach Durchgang durch das optische Element 2 und die polarisationsdrehende Flüssigkristallschicht 3 gezeigt. Damit wird im Rahmen der weiteren Lichtpropagation aufgrund des optischen Elements 1 alles Licht ausgelöscht, dass sich unter einem Winkel größer 25° oder etwa 30° ausbreitet. Dies entspricht der Betriebsart B2 und ist in Fig. 4c dargestellt.

Fig. 8 zeigt die Prinzipskizze eines schaltbaren Lichtfilters 5 in einer vierten Ausgestaltung. Dieser schaltbare Lichtfilter 5 umfasst zwei schaltbare optische Elemente 1, 2, wobei jedes der beiden optischen Elemente eine erste Schicht S1, oder eine erste Schicht S1 und mehrere weitere Schichten S2, ..., umfasst. Analog zu den optischen Elementen der dritten Ausgestaltung umfasst jede der Schichten S1, S2, ... ein Material mit einer Vielzahl an Licht absorbierenden Übergangsdipolmomenten, wobei jedes Übergangsdipolmoment mindestens in einem ersten Zustand mit einer Toleranz von maximal 10° parallel zu einer für das erste optische Element 1 wählbaren ersten Vorzugsrichtung und für das zweite optische Element 2 wählbaren zweiten Vorzugsrichtung ausgerichtet ist oder um diese herum fluktuiert, so dass Licht, welches in das erste oder zweite optische Element 1, 2 einfällt, in Abhängigkeit von seiner Einfallsrichtung gegenüber den Schichten S1, S2, ... und seines Polarisationszustandes transmittiert oder mindestens teilweise absorbiert wird.

Im Unterschied zur dritten Ausgestaltung sind die optischen Elemente 1, 2 hier jedoch schaltbar, d.h. die Übergangsdipolmomente in jeder der Schichten S1, S2, ... können in ihrer Ausrichtung und/oder ihrem Betrag zwischen dem ersten und mindestens einem zweiten Zustand variiert werden, um die jeweilige Schicht S1, S2, ... alternativ in mindestens zwei verschiedene Zustände zu versetzen. In dieser Ausgestaltung umfasst der schaltbare Lichtfilter 5 Mittel zur wahlweisen Erzeugung eines ersten elektrischen Feldes EF1 oder eines zweiten elektrischen Feldes EF2, wobei für jedes der beiden optischen Elemente 1, 2 der erste Zustand durch Anlegen des ersten elektrischen Feldes EF1 und der zweite Zustand durch Anlegen des zweiten elektrischen Feldes erzeugt wird. In dem Ausführungsbeispiel gemäß der vierten Ausgestaltung liegt das erste elektrische Feld EF1 am ersten optischen Element 1 und das zweite elektrische Feld EF2 am zweiten optischen Element 2 an.

Optional kann ober- oder unterhalb der optischen Elemente 1 - als Einheit zusammengefasst - ein Polarisationsfilter angeordnet sein. Dieser ist nicht notwendig, kann aber die Leistungsfähigkeit des schaltbaren Lichtfilters 5 verbessern. Die Polarisation des Polarisationsfilters P und die des einfallenden Lichtes müssen kongruent sein. Zwischen den beiden optischen Elementen 1, 2 ist eine optisch anisotrope Schicht 7 zur Rotation einer Polarisationsrichtung um 90° von Licht, dass die optisch anisotrope Schicht 7 durchdringt, angeordnet. Bei der optisch anisotropen Schicht 7 kann es sich beispielsweise um eine Schicht mit Flüssigkristallen handeln oder um eine Halbwellenplatte. Zeichnerisch nicht dargestellt sind die Mittel zur Erzeugung der beiden elektrischen Felder EF1 und EF2.

Bei Anliegen des ersten elektrischen Feldes EF1 in einer ersten Betriebsart B1 für einen freien Sichtmodus wird unpolarisiertes Licht, welches in einem beliebigen Winkel zum schaltbaren Lichtfilter 5 in diesen einfällt, zu mindestens 24% transmittiert, wobei in der ersten Betriebsart B1 die Übergangsdipolmomente der beiden optischen Elemente 1, 2 senkrecht zueinander ausgerichtet sind und sind, falls ein Polarisationsfilter P vorhanden ist, Polarisationsfilter-Übergangdipolelemente des Polarisationsfilters P zu den Übergangsdipolmomenten des dem Polarisationsfilters P nächstliegenden schaltbaren optischen Elements 1, 2 parallel ausgerichtet.

Bei Anliegen des zweiten elektrischen Feldes EF2 in einer zweiten Betriebsart B2 für einen eingeschränkten Sichtmodus hingegen wird einerseits unpolarisiertes Licht, welches parallel zur ersten Vorzugsrichtung oder zur zweiten Vorzugsrichtung in den schaltbaren Lichtleiter 5 einfällt, zu mindestens 24% transmittiert und andererseits unpolarisiertes Licht, welches in einem Winkel von mehr als 30° zu der entsprechenden Vorzugsrichtung in den schaltbaren Lichtleiter 5 einfällt, zu mindestens 85% absorbiert, wobei in der Betriebsart B2 die Übergangsdipolmomente des Polarisationsfilters P, wenn vorhanden, und die Übergangsdipolmomente des dem Polarisationsfilters P nächstliegenden schaltbaren optischen Elements 1, 2 senkrecht zueinander und die Übergangsdipolmomente der beiden optischen Elemente 1, 2 jeweils parallel zueinander ausgerichtet sind. Auch hier entsprechen die Vorzugsrichtungen bevorzugt der Mittelsenkrechten des schaltbaren Lichtfilters 5, die in Fig. 8 in der Zeichenebene liegt. Dies gilt bei entsprechender Ausrichtung des schaltbaren Lichtfilters 5, wie schon in Bezug auf die dritte Ausgestaltung erwähnt, insbesondere gleichzeitig sowohl in horizontaler als auch in vertikaler Richtung, wenn die Horizontale parallel zur Unterkante und die Vertikale parallel zur linken oder rechten Seitenkante der Schicht S1 orientiert ist.

Somit erlaubt der schaltbare Lichtfilter 5 dieser vierten Ausgestaltung im Zusammenspiel mit einer Bildwiedergabeeinheit die Umschaltung zwischen einer in alle Richtungen freien Betrachtung und einem vierseitigen Sichtschutz (freie Sicht B1 vs. Oben/unten/links/rechts geschützt B2).

Eine erste Ausgestaltung des schaltbaren Lichtfilters 5 ist als Prinzipskizze in Fig. 9 gezeigt. Sie umfasst ein nicht schaltbares erstes optisches Element 1, wiederum eine erste Schicht S1 oder eine erste Schicht S1 und mehrere weitere Schichten S2, ... umfassend, wobei jede Schicht S1, S2, ... ein Material mit einer Vielzahl an Licht absorbierenden Übergangsdipolmomenten umfasst. Jedes Übergangsdipolmoment ist mindestens in einem ersten Zustand mit einer Toleranz von maximal 10° parallel zu einer für das erste optische Element 1 wählbaren ersten Vorzugsrichtung ausgerichtet oder fluktuiert um diese herum, so dass Licht, welches in das erste optische Element 1 einfällt, in Abhängigkeit von seiner Einfallsrichtung gegenüber den Schichten S1, S2, ... und seines Polarisationszustandes transmittiert oder mindestens teilweise absorbiert wird.

Dem ersten optischen Element 1 ist ein Polarisationsfilter P vor- oder nachgeordnet. Zeichnerisch nicht dargestellt sind wiederum die Mittel zur wahlweisen Erzeugung eines ersten elektrischen Feldes EF1 oder eines zweiten elektrischen Feldes EF2. Zwischen dem ersten optischen Element 1 und dem Polarisationsfilter P ist eine Flüssigkristallschicht 3 angeordnet, auf welche das erste elektrische Feld EF1 oder das zweite elektrische Feld EF2 wirkt und die in Abhängigkeit davon den Polarisationszustand von durch sie hindurchdringendem Licht beeinflusst.

Bei dieser ersten Ausgestaltung wird in einer ersten Betriebsart B1, in welcher das erste elektrische Feld EF1 anliegt, mit einer ersten Unterbetriebsart UBH und einer zweiten Unterbetriebsart UBV, einerseits unpolarisiertes Licht, welches parallel zur ersten Vorzugsrichtung in den schaltbaren Lichtfilter 5 einfällt, zu mindestens 24% transmittiert und andererseits unpolarisiertes Licht, welches in einem Winkel von mehr als 30° zu der ersten Vorzugsrichtung in den schaltbaren Lichtfilter 5 einfällt, zu mindestens 85% absorbiert, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt. Die erste Vorzugsrichtung ist dabei bevorzugt wieder parallel zur Mittelsenkrechten des schaltbaren Lichtfilters 5 in der Zeichenebene. Hinsichtlich der Lage der ersten und zweiten Richtung lassen sich die in Bezug auf die dritte Ausgestaltung gemachten Ausführungen analog anwenden.

In einer zweiten Betriebsart B2, in welcher das zweite elektrische Feld EF2 anliegt, mit der ersten Unterbetriebsart UBH und der zweiten Unterbetriebsart UBV, wird einerseits unpolarisiertes Licht, welches parallel zu der ersten Vorzugsrichtung in den schaltbaren Lichtfilters 5 einfällt, zu mindestens 24% transmittiert und andererseits unpolarisiertes Licht, welches in einem Winkel von mehr als 30° zu der ersten Vorzugsrichtung in den schaltbaren Lichtfilter 5 einfällt, zu mindestens 85% absorbiert, wobei diese Absorption in der ersten Unterbetriebsart UBH ausschließlich in der zweiten Richtung und in der zweiten Unterbetriebsart UBV ausschließlich in der zur ersten Richtung senkrechten zweiten Richtung erfolgt, so dass die Richtungen der Absorption für jede der beiden Unterbetriebsarten UBH, UBV sich für die erste Betriebsart B1 und die zweite Betriebsart B2 um jeweils 90° unterscheiden.

Anders als zuvor handelt es sich hier bei beiden Betriebsarten um Betriebsarten mit eingeschränkten Sichtmodi, wobei der Sichtschutz zwischen zwei zueinander senkrechten Richtungen - beispielsweise horizontal und vertikal - gewechselt werden kann. Die Konfiguration dieser ersten Ausgestaltung eines schaltbaren Lichtfilters 5 kann durch Rotation des Polarisationsfilters P um 90° zwischen den Unterbetriebsarten UBV und UBH gewechselt werden.

Auch hier ist es möglich, dass zum Beispiel entweder das erste elektrische Feld EF1 oder das zweite elektrische Feld EF2 einen feldfreien Zustand beschreibt, wobei das jeweils andere elektrische Feld EF2 bzw. EF1 eine absolute Feldstärke größer null, z.B. 0,5 MV/m, aufweisen. Dabei kann der feldfreie Zustand je nach Ausgestaltung des optischen Elements 1 und des Polarisationsfilters P bedeuten, dass die Unterbetriebsart UBH vorliegt. Es ist aber auch möglich, dass im feldfreien Zustand die Unterbetriebsart UBV vorliegt.

Somit erlaubt der schaltbare Lichtfilter 5 dieser ersten Ausgestaltung im Zusammenspiel mit einer Bildwiedergabeeinheit die Umschaltung zwischen einem Sichtschutz in der vertikalen und einem Sichtschutz in der horizontalen Richtung (oben/unten geschützt UBV vs. links/rechts geschützt UBH). Etwa in einem Laptop würde dies bedeuten, dass ein Nutzer die Inhalte in der Unterbetriebsart UBV mit weiteren Personen, die neben dem Nutzer befindlich und im Wesentlichen mit gleicher Augenhöhe angeordnet sind, gemeinsam anschauen kann, während in der Unterbetriebsart UBH die seitlich benachbarten Personen den Bildinhalt nicht sehen können. Der schaltbare Lichtfilter 5 dieser dritten Ausgestaltung kann in seinem Aufbau variiert werden, wie weiter oben beschrieben wurde.

Schließlich zeigt Fig. 10 als Prinzipskizze eine zweite Ausgestaltung eines schaltbaren Lichtfilters 5. Das erste optische Element 1 ist analog zu dem optischen Element 1 der ersten Ausgestaltung aufgebaut, jedoch im Unterschied zu diesem schaltbar, d.h. die Übergangsdipolmomente in jeder der Schichten S1, S2, können in ihrer Ausrichtung und/oder ihrem Betrag zwischen dem ersten und mindestens einem zweiten Zustand variiert werden, um die jeweilige Schicht S1, S2, ... alternativ in mindestens zwei verschiedene Zustände versetzen zu können. Dem ersten optischen Element 1 vor- oder nachgeordnet ist ein Polarisationsfilter P. Zeichnerisch nicht dargestellt sind wiederum die Mittel zur wahlweisen Erzeugung eines ersten elektrischen Feldes EF1 oder eines zweiten elektrischen Feldes EF2, wobei für das erste optische Element 1 der erste Zustand durch Anlegen des ersten elektrischen Feldes EF1 und der zweite Zustand durch Anlegen des zweiten elektrischen Feldes erzeugt wird.

In einer ersten Betriebsart B1, in welcher das erste elektrische Feld EF1 anliegt und die Übergansdipolmomente der Schichten S1, S2, ... des ersten optischen Elements 1 entlang der ersten Vorzugsrichtung ausgerichtet sind, mit einer ersten Unterbetriebsart UBH und einer zweiten Unterbetriebsart UBV, wird einerseits unpolarisiertes Licht, welches parallel zur ersten Vorzugsrichtung in den schaltbaren Lichtfilter 5 einfällt, zu mindestens 24% transmittiert, und andererseits unpolarisiertes Licht, welches in einem Winkel von mehr als 30° zu der ersten Vorzugsrichtung in den schaltbaren Lichtfilter 5 einfällt, zu mindestens 85% absorbiert, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt. Die erste Vorzugsrichtung ist dabei bevorzugt wieder parallel zur Mittelsenkrechten des schaltbaren Lichtfilters 5 in der Zeichenebene. Hinsichtlich der Lage der ersten und zweiten Richtung lassen sich die in Bezug auf die dritte Ausgestaltung gemachten Ausführungen analog anwenden.

In einer zweiten Betriebsart B2, in welcher das zweite elektrische Feld EF2 anliegt, sind die Übergangsdipolmomente der Schichten S1, S2, ... des ersten optischen Elements (1) parallel zu einer Oberfläche des - in diesem Zusammenhang auch als Substrat bezeichneten - Polarisationsfilters P und senkrecht zu einer Transmissionsrichtung des Polarisationsfilters P ausgerichtet. Unpolarisiertes Licht, welches in einem beliebigen Winkel zu der ersten Vorzugsrichtung in den schaltbaren Lichtfilter (5) einfällt, wird dann zu mindestens 24% transmittiert.

Auch hierbei ist es wiederum möglich, dass zum Beispiel entweder das elektrische Feld EF1 oder das elektrische Feld EF2 einen feldfreien Zustand beschreibt, wobei das jeweils andere elektrische Feld EF2 bzw. EF1 eine absolute Feldstärke größer null, z.B. 0.5 MV/m, aufweisen. Dabei kann der feldfreie Zustand je nach Ausgestaltung des optischen Elements 1 und des Polarisationsfilters P bedeuten, dass die Betriebsart B2 vorliegt. Es ist aber auch möglich, dass im feldfreien Zustand die Betriebsart B1 mit einer der Unterbetriebsarten UBH oder UBV vorliegt.

Somit erlaubt der schaltbare Lichtfilter 5 dieser zweiten Ausgestaltung im Zusammenspiel mit einer Bildwiedergabeeinheit die Umschaltung zwischen einem Sichtschutz in der vertikalen bzw. der horizontalen Richtung und keinem Sichtschutzeffekt (oben/unten geschützt UBV bzw. links/rechts geschützt UBH vs. kein Sichtschutz B3).

Für besondere Anwendungsfälle kann ein schaltbarer Lichtfilter 5 - unabhängig in welcher der vorgenannten Ausgestaltungen - in mehrere, separat schaltbare Segmente unterteilt sein, so dass eine lokale Umschaltbarkeit zwischen den jeweils möglichen Betriebszuständen ermöglicht wird. Im Zusammenspiel mit einer Bildwiedergabeeinheit würde dies heißen, dass beispielsweise nur ein Teil der Bildfläche zwischen einem Sichtschutz und keinem Sichtschutzeffekt für freie Sicht umgeschaltet werden kann, während der dazu komplementäre Teil der Bildfläche permanent in einem Sichtschutzmodus oder in keinem Sichtschutzmodus befindlich ist. Es können sogar mehrere, voneinander geometrisch getrennte, solche Segmente vorhanden sein, die separat oder gemeinsam zwischen den Betriebsarten umgeschaltet werden können.

Wie vorstehend schon angemerkt, lässt sich der vorbeschriebene schaltbare Lichtfilter 5 mit einer Bildwiedergabeeinheit zu einem Bildschirm kombinieren. Ein solcher Bildschirm, der in mindestens einem ersten Betriebszustand UBV und/oder B3 für einen in der horizontalen Richtung freien Sichtmodus und in mindestens einem zweiten Betriebszustand UBH und/oder B2 für einen in der horizontalen Richtung eingeschränkten Sichtmodus betrieben werden kann, umfasst einen wie vorstehend beschriebenen schaltbaren Lichtfilter 5 einer der vier genannten Ausgestaltungen sowie eine dem schaltbaren Lichtfilter 5 von einem Betrachter 6 aus gesehen nach- oder vorgeordnete Bildwiedergabeeinheit.

Vorteilhaft entspricht die Bildwiedergabeeinheit einem LCD-Panel, dessen einer Polarisationsfilter dem Polarisationsfilter P entspricht. Dabei kann es sich um den vorder- oder rückseitigen Polarisator im LCD-Aufbau handeln. Außerdem kann vorteilhaft der schaltbare Lichtfilter zwischen dem LCD-Panel und dessen Hintergrundbeleuchtung angeordnet sein, um zwischen einem ersten Betriebszustand B3 (oder UBV) für einen freien Sichtmodus und einem zweiten Betriebszustand UBH bzw. B2 für einen eingeschränkten Sichtmodus umzuschalten, weil das Licht der Hintergrundbeleuchtung aufgrund des schaltbaren Lichtfilters in horizontaler Richtung einmal fokussiert (B2 bzw. UBH) und einmal nicht fokussiert (B3 bzw. UBV) wird. Mit "Fokussierung" ist dabei nicht eine Fokussierung nach Art von Linsen gemeint, sondern eine Einengung des Abstrahlbereichs bzw. Transmission in Abhängigkeit des Einstrahlwinkels.

Ein solcher Bildschirm findet vorteilhaft Verwendung in einem mobilen Gerät, einem Kraft-, Luft- oder Wasserfahrzeug, in einem Zahlterminal oder in einem Zugangssystem. Dabei kann zwischen den genannten Betriebsarten umgeschaltet werden, um sensitive Daten zu schützen, d.h. für nur einen Betrachter wahrnehmbar darzustellen, oder alternativ Bildinhalte gleichzeitig für mehrere Betrachter darzustellen.

Bei dem vorangehend beschriebenen optischen Element wird Licht, welches in dieses einfällt und es durchdringt, in Abhängigkeit von seiner Einfallsrichtung und seinen Polarisationseigenschaften transmittiert oder teilweise oder ganz absorbiert. Ein schaltbarer Lichtfilter, welcher ein solches optisches Element verwendet, beeinflusst die Transmission von Licht winkelabhängig (optional senkrecht), wobei hier zwischen mindestens zwei Betriebszuständen für einen - hinsichtlich des Blickwinkelbereichs für einen Betrachter - freien und einen eingeschränkten Sichtmodus umgeschaltet werden kann. Dabei sind insbesondere Winkeleinschränkungen in der Transmission in bestimmte Richtungen umschaltbar. Das optische Element bzw. darauf basierende Systeme sind preiswert umsetzbar und insbesondere mit verschiedenartigen Bildschirmtypen universell verwendbar, um eine Umschaltung zwischen einem - mindestens in der horizontalen Richtung bestehenden - Sichtschutz und einem freien Betrachtungsmodus zu ermöglichen, wobei die Auflösung eines solchen Bildschirms grundsätzlich nicht herabgesetzt wird.

Die vorangehend beschriebene Erfindung kann im Zusammenspiel mit einer Bildwiedergabeeinrichtung vorteilhaft überall da angewendet werden, wo vertrauliche Daten angezeigt und/oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten. Die Erfindung kann -wie weiter oben beschrieben - auch im PKW angewendet werden, um wahlweise dem Fahrer oder Beifahrer störende Bildinhalte vorzuenthalten.

### Bezugszeichenliste

- 1: erstes optisches Element
- 2: zweites optisches Element
- 3: Flüssigkristallschicht
- 4: Ausrichtungsschicht
- 5: schaltbarer Lichtfilter
- 6: Betrachter
- 7: optisch anisotrope Schicht
- A1...A5: Bereiche
- E1, E2: Elektrode
- E2: zweites elektrisches Feld
- P: Polarisationsfilter
- S: transparentes Substrat
- S1...S3: Schicht

## Patentansprüche

1. Schaltbarer Lichtfilter (5), umfassend
- ein passives erstes optisches Element (1), welches
• eine erste Schicht (S1), oder eine erste Schicht (S1) und mehrere weitere Schichten (S2, ...),
• wobei jede Schicht (S1, S2, ...) ein Material mit einer Vielzahl an Licht absorbierenden Übergangsdipolmomenten umfasst,
• wobei jedes Übergangsdipolmoment mit einer Toleranz von maximal 10° parallel zu einer ersten Vorzugsrichtung des ersten optischen Elements (1) ausgerichtet ist oder um diese herum fluktuiert,
• so dass Licht, welches in das erste optische Element (1) einfällt, in Abhängigkeit von seiner Einfallsrichtung gegenüber den Schichten (S1, S2, ...) und seines Polarisationszustandes transmittiert oder mindestens teilweise absorbiert wird,
- einen Polarisationsfilter (P), welcher dem ersten optischen Element (1) in der Einfallsrichtung gesehen vor- oder nachgeordnet ist,
- Mittel zur wahlweisen Erzeugung eines ersten elektrischen Feldes (EF1) oder eines zweiten elektrischen Feldes (EF2),
- eine zwischen dem ersten optischen Element (1) und dem Polarisationsfilter (P) angeordnete Flüssigkristallschicht (3), auf welche das erste elektrische Feld (EF1) oder das zweite elektrische Feld (EF2) wirkt und die in Abhängigkeit davon den Polarisationszustand von durch sie hindurchdringendem Licht beeinflusst, so dass
- in einer ersten Betriebsart B1, in welcher das erste elektrische Feld (EF1) anliegt, mit einer ersten Unterbetriebsart UBH und einer zweiten Unterbetriebsart UBV, einerseits unpolarisiertes Licht, welches parallel zur ersten Vorzugsrichtung in den schaltbaren Lichtfilter (5) einfällt, zu mindestens 24% transmittiert und andererseits unpolarisiertes Licht, welches in einem Winkel von mehr als 30° zu der ersten Vorzugsrichtung in den schaltbaren Lichtfilter (5) einfällt, zu mindestens 85% absorbiert wird, wobei diese Absorption in der ersten Unterbetriebsart UBH ausschließlich in einer ersten Richtung und in der zweiten Unterbetriebsart UBV ausschließlich in einer zur ersten Richtung senkrechten zweiten Richtung erfolgt,
- in einer zweiten Betriebsart B2, in welcher das zweite elektrische Feld (EF2) anliegt, mit der ersten Unterbetriebsart UBH und der zweiten Unterbetriebsart UBV, einerseits unpolarisiertes Licht, welches parallel zu der ersten Vorzugsrichtung in den schaltbaren Lichtfilters (5) einfällt, zu mindestens 24% transmittiert und andererseits unpolarisiertes Licht, welches in einem Winkel von mehr als 30° zu der ersten Vorzugsrichtung in den schaltbaren Lichtfilter (5) einfällt, zu mindestens 85% absorbiert wird, wobei diese Absorption in der ersten Unterbetriebsart UBH ausschließlich in der zweiten Richtung und in der zweiten Unterbetriebsart UBV ausschließlich in der zur ersten Richtung senkrechten zweiten Richtung erfolgt, so dass die Richtungen der Absorption für jede der beiden Unterbetriebsarten UBH, UBV sich für die erste Betriebsart B1 und die zweite Betriebsart B2 um jeweils 90° unterscheiden.

2. Schaltbarer Lichtfilter (5) nach Anspruch 1 , **dadurch gekennzeichnet, dass** die Vorzugsrichtungen jeweils einen Winkel zwischen 0° und 45° zu einer Flächennormale der ersten Schicht (S1) einschließen.

3. Schaltbarer Lichtfilter (5) nach einem der Ansprüche 1 oder 2, **dadurch gekennzeichnet, dass** der schaltbare Lichtfilter (5) in einer Ebene senkrecht zu einer Flächennormale der ersten Schicht (S1) in mehrere, separat schaltbare Segmente unterteilt ist, so dass eine lokale Umschaltbarkeit zwischen den jeweils möglichen Betriebszuständen ermöglicht wird.

4. Schaltbarer Lichtfilter (5) nach einem der Ansprüche 1 bis 3, **dadurch gekennzeichnet, dass** jede der Schichten (S1, S2, ...) des ersten optischen Elements (1) ir ihrer Struktur nicht-periodisch aufgebaut ist.

5. Bildschirm, umfassend einen schaltbaren Lichtfilter (5) nach einem der Ansprüche 1 bis 4 und eine dem schaltbaren Lichtfilter (5) von einem Betrachter aus gesehen nach- oder vorgeordnete Bildwiedergabeeinheit.

## Claims

1. A switchable light filter (5), comprising
- a passive first optical element (1), which comprises
• a first layer (S1), or a first layer (S1) and several additional layers (S2, ...),
• wherein each layer (S1, S2, ...) comprises a material having a plurality of light-absorbing transition dipole moments,
• wherein each transition dipole moment is aligned parallel to a first preferred direction of the first optical element (1) or fluctuates around it, with a tolerance of no more than 10°,
• such that light incident on the first optical element (1) is transmitted or at least partially absorbed, depending on its direction of incidence relative to the layers (S1, S2, ...) and its polarization state,
- a polarization filter (P), which is located either upstream or downstream of the first optical element (1) as viewed in the direction of incidence,
- means for selectively generating either a first electric field (EF1) or a second electric field (EF2),
- a liquid crystal layer (3) arranged between the first optical element (1) and the polarization filter (P), on which the first electric field (EF1) or the second electric field (EF2) acts and which, as a function thereof, influences the polarization state of light passing through it, such that
- in a first operating mode B1, in which the first electric field (EF1) is applied and which comprises a first sub-mode UBH and a second sub-mode UBV, on the one hand, at least 24% of unpolarized light incident on the switchable light filter (5) parallel to the first preferred direction is transmitted, and on the other hand, at least 85% of unpolarized light incident on the switchable light filter (5) at an angle of more than 30° to the first preferred direction is absorbed, said absorption occurring exclusively in a first direction in the first sub-operating mode UBH and exclusively in a second direction perpendicular to the first direction in the second sub-operating mode UBV, and
- in a second operating mode B2, in which the second electric field (EF2) is applied and which comprises the first sub-operating mode UBH and the second sub-operating mode UBV, on the one hand, at least 24% of unpolarized light incident on the switchable light filter (5) is transmitted, and, on the other hand, at least 85% of unpolarized light incident on the switchable light filter (5) at an angle of more than 30° to the first preferred direction is absorbed, said absorption occurring exclusively in the second direction in the first sub-operating mode UBH and exclusively in the second direction perpendicular to the first direction in the second sub-operating mode UBV, such that the directions of absorption for each of the two sub-operating modes UBH and UBV differ by 90° for the first operating mode B1 and the second operating mode B2, respectively.

2. The switchable light filter (5) according to claim 1, **characterized in that** the preferred directions each form an angle between 0° and 45° with respect to a surface normal of the first layer (S1).

3. The switchable light filter (5) according to any one of claims 1 or 2, **characterized in that** the switchable light filter (5) is divided into several separately switchable segments in a plane perpendicular to a surface normal of the first layer (S1), thereby enabling local switching between the respective possible operating states.

4. The switchable light filter (5) according to any one of claims 1 to 3, **characterized in that** each of the layers (S1, S2, ...) of the first optical element (1) has a non-periodic structure.

5. A display comprising a switchable light filter (5) according to any one of claims 1 to 4 and an image display unit positioned behind or in front of the switchable light filter (5), as viewed from a viewer's perspective.

## Revendications

1. Filtre de lumière commutable (5), comprenant
- un premier élément optique passif (1), qui comprend
• une première couche (S1), ou une première couche (S1) et plusieurs autres couches (S2, ...),
• chaque couche (S1, S2, ...) comprenant un matériau présentant une pluralité de moments dipolaires de transition absorbant la lumière,
• chaque moment dipolaire de transition étant aligné parallèlement à une première direction préférentielle du premier élément optique (1) avec une tolérance maximale de 10°, ou fluctuant autour de celle-ci,
• de sorte que la lumière incidente sur le premier élément optique (1) soit transmise ou au moins partiellement absorbée en fonction de sa direction d'incidence par rapport aux couches (S1, S2, ...) et de son état de polarisation,
- un filtre polarisant (P) qui est placé en amont ou en aval du premier élément optique (1), vu dans la direction d'incidence,
- des moyens permettant de générer, au choix, un premier champ électrique (EF1) ou un deuxième champ électrique (EF2),
- une couche de cristaux liquides (3) disposée entre le premier élément optique (1) et le filtre polarisant (P), sur laquelle agit le premier champ électrique (EF1) ou le deuxième champ électrique (EF2) et qui, en fonction de celui-ci, influence l'état de polarisation de la lumière qui la traverse, de sorte que
- dans un premier mode de fonctionnement B1, dans lequel le premier champ électrique (EF1) est appliqué et qui comprend un premier sous-mode UBH et un deuxième sous-mode UBV, d'une part, au moins 24 % de la lumière non polarisée qui pénètre dans le filtre de lumière commutable (5) parallèlement à la première direction préférentielle soit transmise et, d'autre part, au moins 85 % de la lumière non polarisée qui pénètre dans le filtre de lumière commutable (5) sous un angle supérieur à 30° par rapport à la première direction préférentielle soit absorbée, cette absorption s'effectuant, dans le premier sous-mode de fonctionnement UBH, exclusivement dans une première direction et, dans le deuxième sous-mode de fonctionnement UBV, exclusivement dans une deuxième direction perpendiculaire à la première direction, et
- dans un deuxième mode de fonctionnement B2, dans lequel le deuxième champ électrique (EF2) est appliqué et qui comprend le premier sous-mode UBH et le deuxième sous-mode UBV, d'une part au moins 24 % de la lumière non polarisée qui pénètre dans le filtre de lumière commutable (5) parallèlement à la première direction préférentielle soit transmise, et d'autre part au moins 85 % de la lumière non polarisée qui pénètre dans le filtre de lumière commutable (5) sous un angle supérieur à 30° par rapport à la première direction préférentielle soit absorbée, cette absorption s'effectuant, dans le premier sous-mode de fonctionnement UBH, exclusivement dans la deuxième direction et, dans le deuxième sous-mode de fonctionnement UBV, exclusivement dans la deuxième direction perpendiculaire à la première direction, de sorte que les directions d'absorption pour chacun des deux sous-modes de fonctionnement UBH et UBV diffèrent de 90° l'une de l'autre pour le premier mode de fonctionnement B1 et le deuxième mode de fonctionnement B2.

2. Filtre de lumière commutable (5) selon la revendication 1, **caractérisé en ce que** les directions préférentielles forment chacune un angle compris entre 0° et 45° par rapport à la normale à la surface de la première couche (S1).

3. Filtre de lumière commutable (5) selon l'une quelconque des revendications 1 ou 2, **caractérisé en ce que** le filtre de lumière commutable (5) est divisé, dans un plan perpendiculaire à la normale à la surface de la première couche (S1), en plusieurs segments commutables séparément, de manière à permettre une commutation locale entre les différents états de fonctionnement possibles.

4. Filtre de lumière commutable (5) selon l'une quelconque des revendications 1 à 3, **caractérisé en ce que** chacune des couches (S1, S2, ...) du premier élément optique (1) présente une structure non périodique.

5. Écran comprenant un filtre de lumière commutable (5) selon l'une quelconque des revendications 1 à 4 et une unité de reproduction d'images disposée derrière ou devant le filtre de lumière commutable (5), du point de vue d'un observateur.
